# EUROPEAN PATENT APPLICATION

(11) **EP 4 717 105 A1**
(43) Date of publication of application: **01.04.2026**
(21) Application number: 25204500.0
(22) Date of filing: 25.09.2025
(51) Int. Cl.: A41G 3/00, G06T 7/00, G06T 7/155, G06T 7/254, G06T 7/33, G06T 7/66

(54) **DETECTION METHOD AND HAIR PLANTING APPARATUS**

(30) Priority: 25.09.2024 JP 2024165741
(71) Applicant: JUKI Corporation, Tama-shi, Tokyo 206-8551 (JP); Artnature Inc., Tokyo 151-0053 (JP)
(72) Inventor: FUJIE, Kimiko, Tokyo 206-8551 (JP)
(74) Representative: Hoeger, Stellrecht & Partner Patentanwälte mbB

(57) **Abstract**

A detection method of detecting hair for planting (M) planted on a mesh of a meshlike base material (J), includes: an image acquisition step of acquiring a pre-image (G1) of the mesh targeted for hair planting of the base material captured before hair planting and a post-image (G2) thereof captured after hair planting; a transformation matrix acquisition step of acquiring a posture transformation matrix of the mesh from the pre-image and the post-image; a difference step of acquiring a difference image (G12) between a transformed pre-image (G11) and the post-image (G2), the transformed pre-image (G11) being obtained by transforming the pre-image with the posture transformation matrix; and a hair detection step of specifying the presence or absence or a hair planting position of hair for planting (M) with respect to the mesh from the difference image.

## Description

### TECHNICAL FIELD

The present invention relates to a detection method of detecting hair for planting planted on a mesh of a mesh-like base material and a hair planting apparatus.

### BACKGROUND ART

In order to manufacture a wig or a hairpiece, a hair planting apparatus of the related art for planting hair for planting to a base material includes a base holding mechanism for holding a mesh-like base material, and a plurality of capture mechanisms for capturing hair for planting with a hook needle and knotting it to the base material (see, for example, JP2020-133073A).

### SUMMARY OF INVENTION

In the hair planting apparatus of the related art, a camera is mounted to capture an image of the base material and to specify a mesh on which hair planting is performed by the capture mechanism.

There is a demand to apply the camera to capture an image of the base material after hair planting and to confirm whether hair planting has been properly performed.

In this case, a method is considered in which a captured image of the mesh of the base material before hair planting is compared with a captured image of the mesh of the base material after hair planting.

However, the mesh-like base material is generally flexible, and the position, shape, posture, or the like of the target mesh is likely to change before and after hair planting, making it difficult to maintain a certain level of accuracy in determination by image comparison.

An object of the present invention is to determine a state of hair planted on a mesh of a base material with higher accuracy than in the related art.

The present invention provides
a detection method of detecting hair for planting planted on a mesh of a mesh-like base material, the detection method including:
image acquisition of acquiring a pre-image of the mesh targeted for hair planting of the base material captured before hair planting and a post-image thereof captured after hair planting,
transformation matrix acquisition of acquiring a posture transformation matrix of the mesh from the pre-image and the post-image,
acquiring a difference image between a transformed pre-image and the post-image, the transformed pre-image being obtained by transforming the pre-image with the posture transformation matrix, and
hair detection of specifying the presence or absence or a hair planting position of hair for planting with respect to the mesh from the difference image.

Another invention provides a hair planting apparatus including:
a base support mechanism configured to support a mesh-like base material,
a hair planting unit configured to knot the hair for planting held by the hair holding mechanism to the base material using a hook needle,
an imaging unit configured to capture a position where the hair planting unit performs a hair planting operation on the base material supported by the base support mechanism,
an image acquisition processing unit configured to acquire a pre-image of a mesh targeted for hair planting of the base material captured before hair planting and a post-image thereof captured after hair planting,
a transformation matrix acquisition processing unit configured to acquire a posture transformation matrix of the mesh from the pre-image and the post-image,
a difference processing unit configured to acquire a difference image between a transformed pre-image and the post-image, the transformed pre-image being obtained by transforming the pre-image with the posture transformation matrix, and
a hair-for-planting detection processing unit configured to specify the presence or absence or a hair planting position of hair for planting with respect to the mesh from the difference image.

By the above configuration, the state of hair planted on the mesh of the base material can be determined with higher accuracy than in the related art.

### BRIEF DESCRIPTION OF DRAWINGS

FIG. 1 is a front view showing a schematic configuration of a hair planting apparatus that is an embodiment of the invention.
FIG. 2 is a block diagram showing a control system of the hair planting apparatus.
FIG. 3 is a perspective view of the hair planting apparatus.
FIG. 4 is another perspective view of the hair planting apparatus.
FIG. 5 is still another perspective view of the hair planting apparatus.
FIG. 6 is a plan view of a base stage.
FIG. 7 is a perspective view of the base stage.
FIG. 8 is a front view of a clamp device with a clamp plate at a lifted position.
FIG. 9 is a front view of the clamp device with the clamp plate at a weak clamp position.
FIG. 10 is a front view of the clamp device with the clamp plate at a strong clamp position.
FIG. 11 is a right side view of a hair supply device and a hair holding mechanism.
FIG. 12A is an explanatory diagram of a binding operation of hair for planting in a right side view, and FIG. 12B is an explanatory diagram of the binding operation of hair for planting in a rear view.
FIG. 13A is an explanatory diagram of the binding operation of hair for planting in a right side view, and FIG. 13B is an explanatory diagram of the binding operation of hair for planting in a rear view.
FIG. 14A is an explanatory diagram of the binding operation of hair for planting in a right side view, and FIG. 14B is an explanatory diagram of the binding operation of hair for planting in a rear view.
FIG. 15 is a flow chart showing an overall flow of operation control of a hair planting operation.
FIG. 16 shows an example of an image of a base material captured by a camera within a range of a work opening.
FIG. 17 is an explanatory diagram showing settings of hair planting pattern data.
FIG. 18A is a pre-image of the base material obtained by imaging, and FIG. 18B is a post-image.
FIG. 19 shows the pre-image and a transformed pre-image generated from the pre-image.
FIG. 20 shows a difference image generated by taking a difference between the transformed pre-image and the post-image.
FIG. 21 shows the transformed pre-image and a dilated image generated from the transformed pre-image.
FIG. 22 is a conceptual diagram in which respective pixels constituting a contour edge are divided into six lines, with each line represented by a different pattern.
FIG. 23 shows hair planting position determination regions corresponding to respective sides of a hexagonal mesh generated from the dilated image.
FIG. 24 shows a conceptual diagram of a process of superimposing the difference image and the hair planting position determination regions corresponding to respective sides of the hexagonal mesh.
FIG. 25 is a table showing a list of scores for obtaining results of hair planting position determination.
FIG. 26 is a flow chart showing contents of a suitability determination process.

### DESCRIPTION OF EMBODIMENTS

### [Overall Configuration of Embodiment of Invention]

Hereinafter, a hair planting apparatus 10 according to an embodiment of the present invention will be described in detail with reference to the drawings.

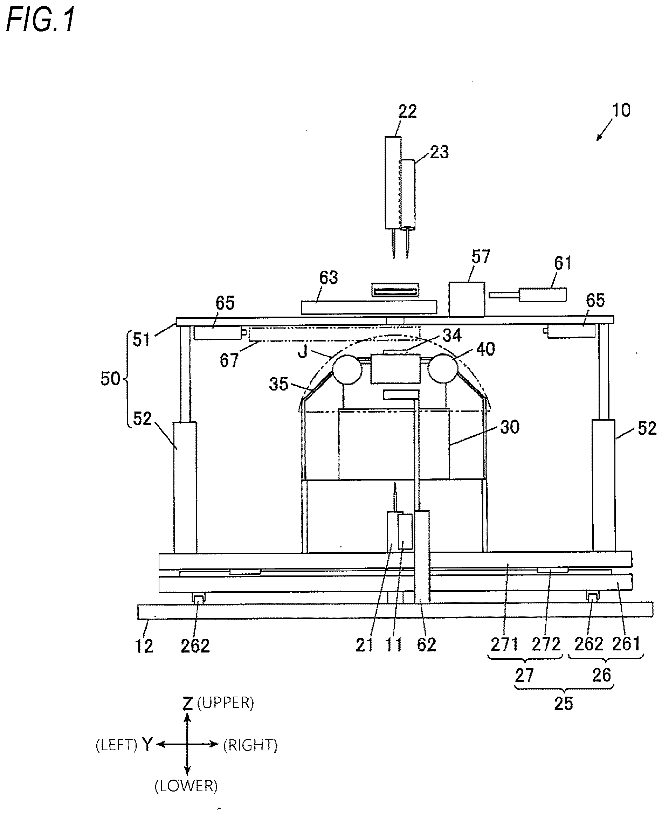

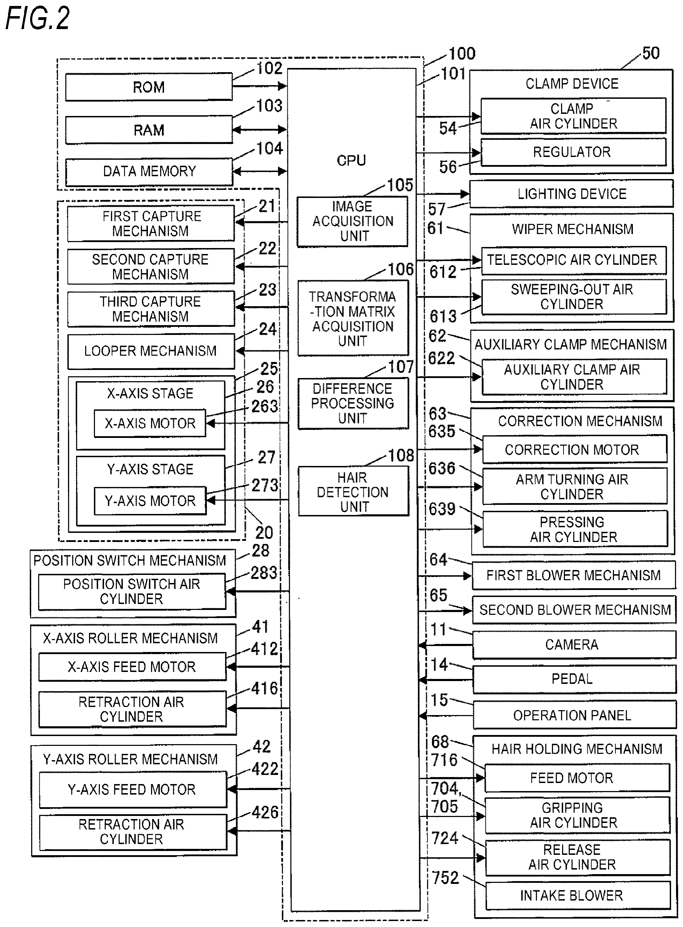

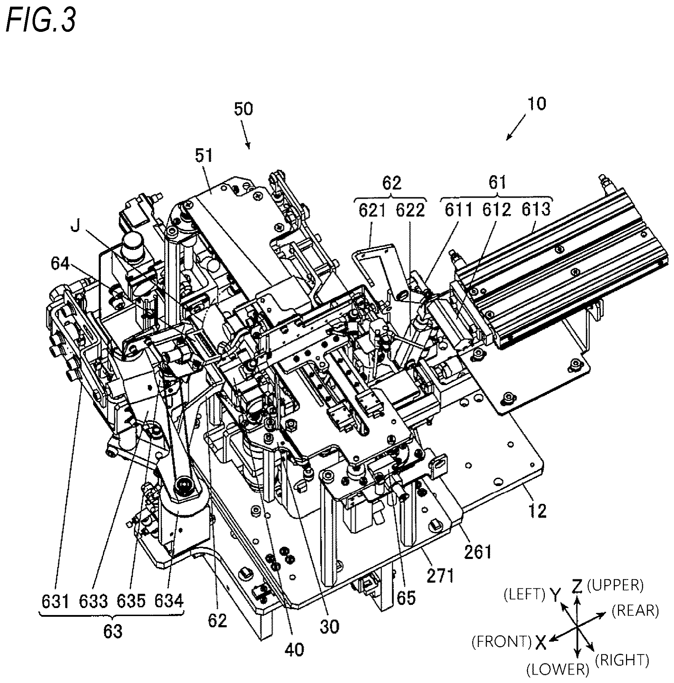

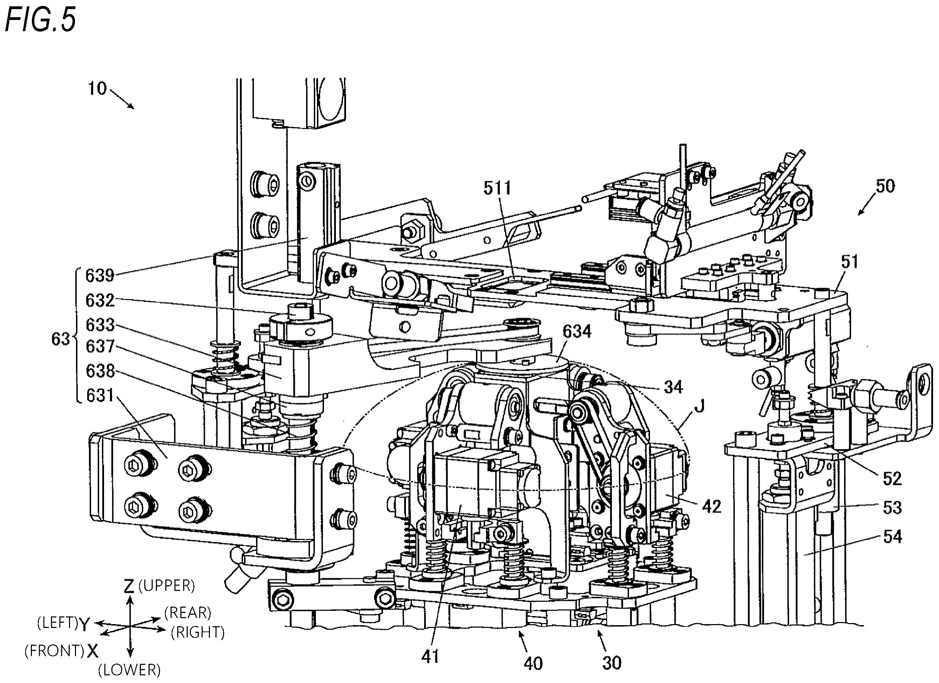

FIG. 1 is a front view showing a schematic configuration of a hair planting apparatus 10, FIG. 2 is a block diagram showing its control system, and FIGS. 3 to 5 are perspective views of the hair planting apparatus 10 viewed from different directions, respectively.

The hair planting apparatus 10 is intended to reduce workload and to smoothly plant a hair for planting M into a base material J in order to manufacture a wig or hairpiece.

The hair for planting M is not limited to human hair, but is intended for all other fibers comparable to human hair, including natural fibers and artificial fibers.

The base material J is not limited to a fiber shape and includes all sheet-like materials having a planar or curved shape, but in the present embodiment, a sheet having a curved shape (approximately a spherical shell shape) that has hexagonal lattice-like mesh holes and imitates the shape of the crown of the human head will be exemplified. Note that the shape of the mesh hole need not be hexagonal.

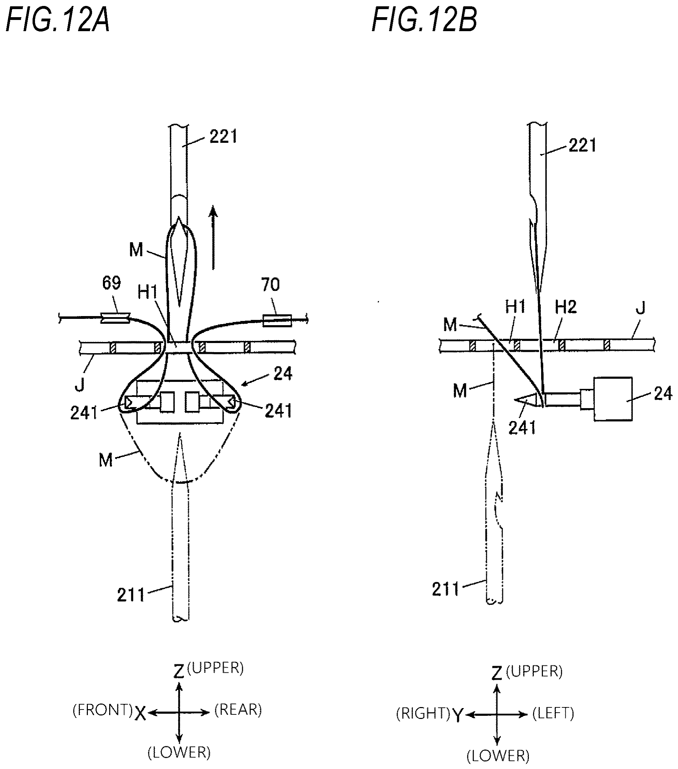

As shown, the hair planting apparatus 10 includes a base stage 30 as a base support mechanism on which the base material J is placed, a feed device 40 that feeds the placed base material J in one direction (referred to as X-axis direction) on the placement surface and another direction (referred to as Y-axis direction) orthogonal to the one direction, a clamp device 50 that holds the base material J placed on the base stage 30 from above, a hair holding mechanism 68 that holds the hair for planting M on one side (e.g., upper surface side) of the base material J supported on the base stage 30, a hair supply device 74 that supplies the hair for planting M to the hair holding mechanism 68, a first capture mechanism 21 that pulls the hair for planting M held in the hair holding mechanism 68 through a mesh hole H1 to a back side (lower side) of the base material J to form a loop, a looper mechanism 24 that expands the loop (see FIGS. 12A to 14B), a second capture mechanism 22 that pulls the loop of the hair for planting M on the back side of the base material J from a neighboring mesh hole H2 to a surface side (upper side) of the base material J, a third capture mechanism 23 that pulls one end portion of the hair for planting M into the small loop of the hair for planting M on the surface side and knots it between the mesh holes H1 and H2, and a moving mechanism 25 that performs a relative movement operation between the base material J and hook needles 211 to 231 of the first to third capture mechanisms 21 to 23.

Further, the hair planting apparatus 10 includes a camera 11 as an imaging unit that captures an image of the placed base material J, a position switch mechanism 28 that holds the camera 11 and the first capture mechanism 21 and switches their positions, a wiper mechanism 61 that sweeps out the planted hair for planting M inserted in an upper opening 511 of a clamp plate 51 described below to the outside of the upper opening 511, an auxiliary clamp mechanism 62 that holds the base material J placed on the base stage 30 in an auxiliary manner, a correction mechanism 63 that corrects an orientation of the base material J on the base stage 30, a first blower mechanism 64 that blows air to orient the hair for planting M planted in the base material J in a predetermined direction, a second blower mechanism 65 that blows air to press the base material J toward the base stage 30, a control device 100 that controls operations of each configuration described above, a base 12 that directly or indirectly supports each configuration described above, and a cover (not shown) that houses the entire hair planting apparatus 10.

Note that, in the following description, the placement surface on which the base material J is placed is horizontal, and one side in the Y-axis direction parallel to the placement surface is referred to as the "left" side, the other side is referred to as the "right" side, while one side in the X-axis direction parallel to the placement surface is referred to as the "front" side (side close to the paper surface in FIG. 1), and the other side is referred to as the "rear" side (side far from the paper surface in FIG. 1). Further, the vertical up-and-down direction orthogonal to the X-axis direction and the Y-axis direction is referred to as a Z-axis direction, and one side in the Z-axis direction is referred to as the "upper" side and the other side is referred to as the "lower" side.

### [Base and Moving Mechanism]

As shown in FIG. 1, the base 12 is a flat plate body that directly or indirectly supports the entire configuration of the hair planting apparatus 10. An upper surface of the base 12 is horizontal in a state in which the hair planting apparatus 10 is installed on the horizontal surface.

The first capture mechanism 21, the second capture mechanism 22, the position switch mechanism 28 that supports the third capture mechanism 23 and the camera 11, the looper mechanism 24, the wiper mechanism 61, the auxiliary clamp mechanism 62, the correction mechanism 63, and the first blower mechanism 64 described above are directly supported on the base 12.

Note that the term "directly supported" means that a configuration is installed without interposition of a mechanism for performing movement and its position in a plan view remains unchanged.

As shown in FIGS. 1 and 2, the moving mechanism 25 includes an X-axis stage 26 installed on the upper surface of the base 12, and a Y-axis stage 27 installed on the X-axis stage 26.

The X-axis stage 26 includes a stage plate 261 having an upper surface parallel to the X-Y plane, a slide guide 262 that supports the stage plate 261 to be slidable along the X-axis direction with respect to the base 12, and a linear moving mechanism (not shown) that allows the stage plate 261 to be moved and positioned arbitrarily in the X-axis direction. The linear moving mechanism includes a ball screw mechanism, and an X-axis motor 263 including a servomotor serving as a drive source of the ball screw mechanism.

The Y-axis stage 27 includes a stage plate 271 having an upper surface parallel to the X-Y plane, a slide guide 272 that supports the stage plate 271 to be slidable along the Y-axis direction with respect to the stage plate 261 of the X-axis stage 26, and a linear moving mechanism (not shown) that allows the stage plate 271 to be moved and positioned arbitrarily in the Y-axis direction. The linear moving mechanism includes a ball screw mechanism, and a Y-axis motor 273 including a servomotor serving as a drive source of the ball screw mechanism.

The base stage 30, the feed device 40, the clamp device 50, and the second blower mechanism 65 are directly supported on the stage plate 271 of the Y-axis stage 27.

The moving mechanism 25 can position the base material J on the base stage 30 at any position in the X-Y plane by cooperation of the X-axis stage 26 and the Y-axis stage 27.

Note that, the linear moving mechanism of each of the X-axis stage 26 and Y-axis stage 27 is not limited to the ball screw mechanism and may be any mechanism that can position the stage plate 261 or 271 at any position along the X-axis direction or the Y-axis direction. For example, the linear moving operation of the stage plate 261 or 271 may be implemented by a configuration of a pinion-rack mechanism and a servomotor, or the stage plate 261 or 271 may be linearly moved by a linear motor.

### [Base Stage]

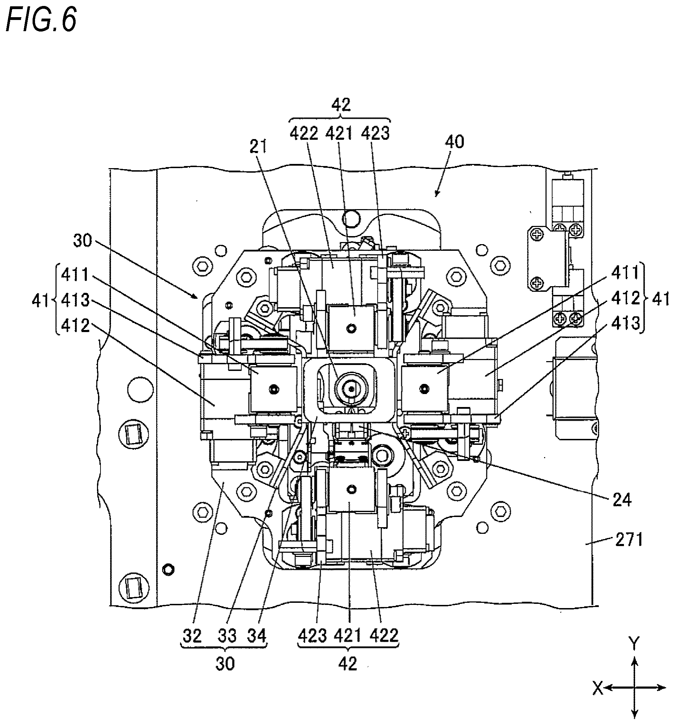

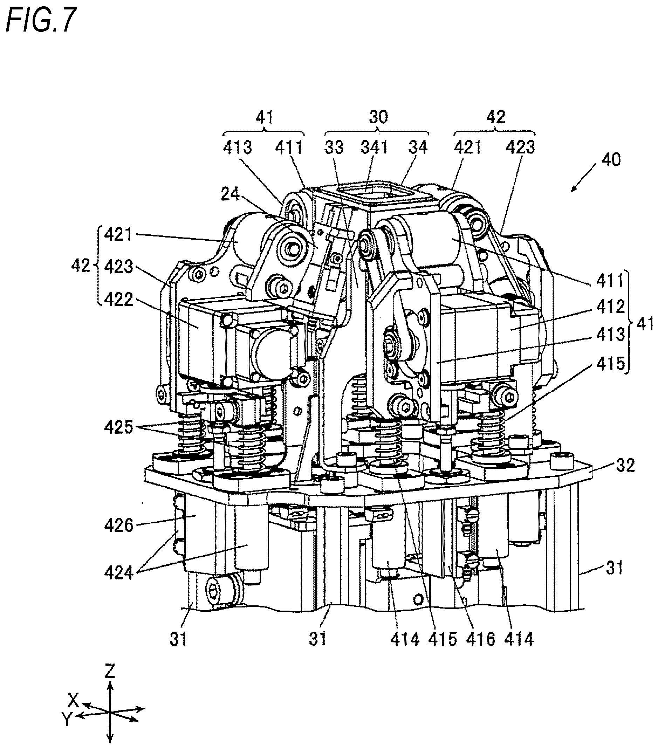

FIG. 6 is a plan view of the base stage 30, and FIG. 7 is a perspective view.

As shown, the base stage 30 includes a base plate 32 supported by four support posts 31 (one is not shown in the drawing) erected on the Y-axis stage 27 of the moving mechanism 25, a tower-like erected portion 33 provided on an upper surface of the base plate 32, and a placement plate 34 serving as a placement part provided at an upper end portion of the erected portion 33.

The erected portion 33 is erected at a central portion of the base plate 32 in a plan view.

The placement plate 34 provided at the upper end portion of the erected portion 33 is a substantially rectangular frame-like body, and includes a work opening 341 having a substantially rectangular shape and formed in a central portion thereof. In addition, an upper surface of the placement plate 34 is a placement surface parallel to the X-Y plane.

During a hair planting operation, the base material J is placed and supported on the placement surface that is the upper surface of the placement plate 34. The placement plate 34 is smaller than the base material J, and the base material J is placed with a lower surface portion thereof in partial contact with the placement plate 34. When performing a binding operation of the hair for planting M to the base material J, it is necessary to insert the hook needle of the first capture mechanism 21 into the mesh hole from the lower side of the base material J, but the insertion of the hook needle is performed through the work opening 341 of the placement plate 34. In addition, the binding operation of the hair for planting M by the second and third capture mechanisms 22 and 23 is also performed within the range of the work opening 341 of the placement plate 34.

### [Feed Device]

As shown in FIGS. 6 and 7, the feed device 40 includes, on the base plate 32 of the base stage 30, a pair of X-axis roller mechanisms 41 and 41 arranged on both sides of the placement plate 34 in the X-axis direction in a plan view, and a pair of Y-axis roller mechanisms 42 and 42 arranged on both sides of the placement plate 34 in the Y-axis direction in a plan view.

Each X-axis roller mechanism 41 includes a roller 411 that comes into contact with the base material J from below, placed on the placement surface of the placement plate 34, an X-axis feed motor 412 serving as a rotational drive source of the roller 411, a support bracket 413 that supports the roller 411 and the X-axis feed motor 412, two slide guides 414 that support the support bracket 413 on the base plate 32 to be movable up and down along the Z-axis direction, two coil springs 415 serving as elastic members to press the support bracket 413 upward, and a retraction air cylinder 416 that pulls the support bracket 413 downward against the coil springs 415.

The X-axis feed motor 412 supported by the support bracket 413 imparts feed rotation from an output shaft thereof to a rotation shaft of the roller 411 by a transmission mechanism including a pulley and a timing belt. The output shaft of the X-axis feed motor 412 and the rotation shaft of the roller 411 are both arranged along the Y-axis direction. Therefore, when the roller 411 is driven to rotate in contact with the base material J from below, placed on the placement surface of the placement plate 34, the base material J can be fed in the X-axis direction.

Each Y-axis roller mechanism 42 includes a roller 421 that comes into contact with the base material J from below, placed on the placement surface of the placement plate 34, a Y-axis feed motor 422 serving as a rotational drive source of the roller 421, a support bracket 423 that supports the roller 421 and the Y-axis feed motor 422, a slide guide 424 that supports the support bracket 423 on the base plate 32 to be movable up and down along the Z-axis direction, a coil spring 425 serving as an elastic member to press the support bracket 423 upward, and a retraction air cylinder 426 that pulls the support bracket 423 downward against the coil spring 425.

The Y-axis feed motor 422 supported by the support bracket 423 imparts feed rotation from an output shaft thereof to a rotation shaft of the roller 421 by a transmission mechanism including a pulley and a timing belt. The output shaft of the Y-axis feed motor 422 and the rotation shaft of the roller 421 are both arranged along the X-axis direction. Therefore, when the roller 421 is driven to rotate in contact with the base material J from below, placed on the placement surface of the placement plate 34, the base material J can be fed in the Y-axis direction.

In a state in which the retraction air cylinders 416 and 426 are not pulling the support brackets 413 and 423 downward and the coil springs 415 and 425 are pressing the support brackets 413 and 423 to the top position, a height of an upper end portion of each of the rollers 411 and 421 is set to match a height of the placement surface (upper surface) of the placement plate 34 or to be slightly lower than the placement surface of the placement plate 34. Each of the rollers 411 and 421 at the height is at a "feed position".

In contrast, in a state in which the retraction air cylinders 416 and 426 are pulling the support brackets 413 and 423 downward, the height of the upper end portion of each of the rollers 411 and 421 is lowered to a height at which the lower surface of the base material J placed on the placement plate 34 is not reached and a feed operation cannot be performed. Each of the rollers 411 and 421 at the height is at a "retraction position".

When the pair of X-axis roller mechanisms 41 is set at the feed position, the pair of Y-axis roller mechanisms 42 is set at the retraction position, and the rollers 411 of the pair of X-axis roller mechanisms 41 are driven to rotate in the same direction, a conveying force in the X-axis direction can be applied to the base material J from both sides of the placement plate 34.

In addition, when the pair of Y-axis roller mechanisms 42 is set at the feed position, the pair of X-axis roller mechanisms 41 is set at the retraction position, and the rollers 421 of the pair of Y-axis roller mechanisms 42 are driven to rotate in the same direction, a conveying force in the Y-axis direction can be applied to the base material J from both sides of the placement plate 34.

In this way, the X-axis roller mechanisms 41 and the Y-axis roller mechanisms 42 do not operate simultaneously, but separately perform conveying in the X-axis direction and conveying in the Y-axis direction.

In addition, when the rollers 411 of the pair of X-axis roller mechanisms 41 at the feed position are driven to rotate reversely in a direction of separating the base material J apart, the tension in the X-axis direction is applied to the base material J on the placement plate 34 such that slack can be suppressed.

In addition, when the rollers 421 of the pair of Y-axis roller mechanisms 42 at the feed position are driven to rotate reversely in a direction of separating the base material J apart, the tension in the Y-axis direction is applied to the base material J on the placement plate 34 such that slack can be suppressed.

Hereinafter, the operation control of applying tension to the base material J in each direction by the pair of X-axis roller mechanisms 41 or the pair of Y-axis roller mechanisms 42 is referred to as "tension applying control".

During the hair planting operation of binding the hair for planting M to the base material J, the moving mechanism 25 described above is used for moving the base material J together with the placement plate 34, and positioning each mesh hole of the base material J in the range of the work opening 341 with respect to the hook needles of the first to third capture mechanisms 21 to 23.

In contrast, the feed device 40 is used for moving the base material J with respect to the placement plate 34 and shifting the range of the base material J facing the work opening 341 of the placement plate 34 to another position in the base material J.

Therefore, the movement of the base material J by the moving mechanism 25 is finely controlled by a very small amount of movement compared with the movement of the base material J by the feed device 40.

Note that, while the configuration in which the roller mechanisms 41 and 42 in two intersecting directions respectively perform the feed in the X-axis direction and the Y-axis direction orthogonal to each other is shown herein, aspects are not limited thereto, and a configuration in which the feed is performed in two obliquely intersecting directions is also possible.

Note that the base stage 30 includes a cover member 35 that covers the base stage 30 and the feed device 40. The cover member 35 has a substantially convex polyhedron shape with an upper end portion thereof protruding upward, and a center of the upper end portion is widely cut out such that the upper portions of the rollers 411 and 421 and the placement plate 34 are respectively exposed upward. The upper end portion of the base stage 30 may have a polyhedral shape closer to a spherical shell or may have a substantially spherical shell shape.

With the cover member 35, the base material J placed on the placement plate 34 is prevented from direct contact with the configurations other than the respective rollers 411 and 421 of the feed device 40, with the corners of the base plate 32, or the like, allowing a smooth feed operation of the base material J by the feed device 40.

Note that the cover member 35 is omitted in the drawings other than FIG. 1.

### [Clamp Device]

As shown in FIGS. 1 and 3 to 5, the clamp device 50 includes a clamp plate (clamp member) 51 including a flat plate body elongated in the Y-axis direction above the base stage 30, a pair of support bases 52 erected on the upper surface of the stage plate 271 of the Y-axis stage 27 to individually support both end portions of the clamp plate 51, a slide guide 53 that allows lifting and lowering of the clamp plate 51 with respect to each support base 52, a clamp air cylinder 54 serving as a lifting/lowering unit that lifts and lowers the clamp plate 51, and a coil spring 55 provided between each support base 52 and the clamp plate 51 and serving as an elastic member to press the clamp plate 51 upward.

Since the clamp device 50 is supported on the stage plate 271 of the Y-axis stage 27, the clamp device 50 is moved in the X-Y directions together with the base stage 30 by the moving mechanism 25.

At a position directly above the work opening 341 of the placement plate 34, the clamp plate 51 is formed with an upper opening 511 penetrating vertically therethrough and having substantially the same shape and size as those of the work opening 341.

A lower surface of the clamp plate 51 can be brought into contact with the placement surface of the placement plate 34 at a lower limit position of the lifting and lowering operation. The clamp plate 51 can clamp the base material J placed on the placement plate 34 from above to fixedly hold the base material J by being lowered to the lower limit position.

Furthermore, at the lower limit position of the lifting and lowering operation, the work opening 341 of the mounting plate 34 and the upper opening 511 can be overlapped at substantially the same position in a plan view.

The second and third capture mechanisms 22 and 23 described above are arranged above the clamp plate 51, and extend the hook needles downward to perform a binding operation of the hair for planting M within a range of the base material J in the work opening 341 through the upper opening 511.

In addition, four contact plates 512 that individually come into contact with outer circumferences of the respective rollers 411 and 421 are provided on four sides of the upper opening 511 on the lower surface side of the clamp plate 51. Each contact plate 512 has a lower surface positioned lower than the lower surface of the clamp plate 51, and comes into contact with an upper portion of each of the rollers 411 and 421 at a position immediately before the clamp plate 51 lowers to the lower limit position of the lifting and lowering operation. In this way, by lowering the clamp plate 51 to a position immediately before the lower limit position, the base material J on the placement plate 34 can be properly brought into contact with each of the rollers 411 and 421, and the feed operation by the pair of X-axis roller mechanisms 41 or the pair of Y-axis roller mechanisms 42 can be performed properly.

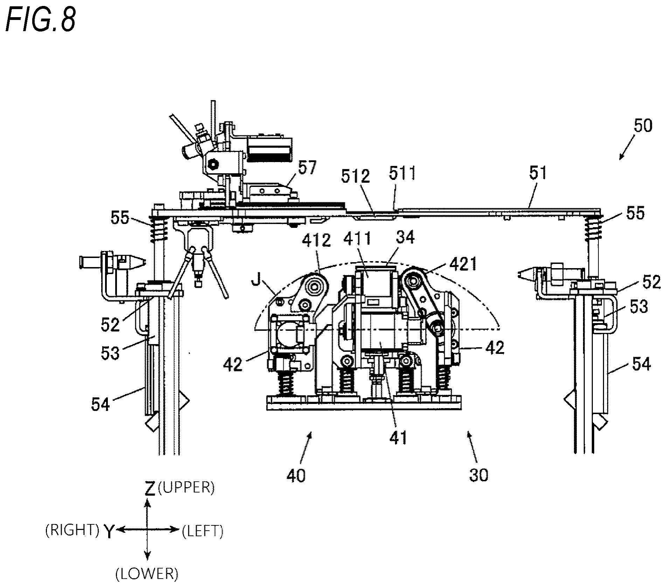

FIGS. 8 to 10 are front views of the clamp device 50 with the clamp plate 51 at different heights, respectively.

FIG. 8 shows a state in which the clamp plate 51 is positioned at a lifted position, which is an upper limit of the lifting and lowering operation, by lifting pressure of each clamp air cylinder 54. In this state, the lower surface of the clamp plate 51 is significantly spaced apart from the placement surface of the placement plate 34.

At the lifted position, the base material J on the placement plate 34 is in an unclamped state. Since the clamp plate 51 at the lifted position is significantly spaced apart from the placement plate 34, the hair for planting M can be swept out through a wiper member 611 of the wiper mechanism 61 described below.

Each clamp air cylinder 54 is provided with a regulator 56 in a supply path from a pneumatic source, and air pressure for lowering the clamp plate 51 can be applied to each clamp air cylinder 54 in two stages of high and low pressures, under control of the control device 100.

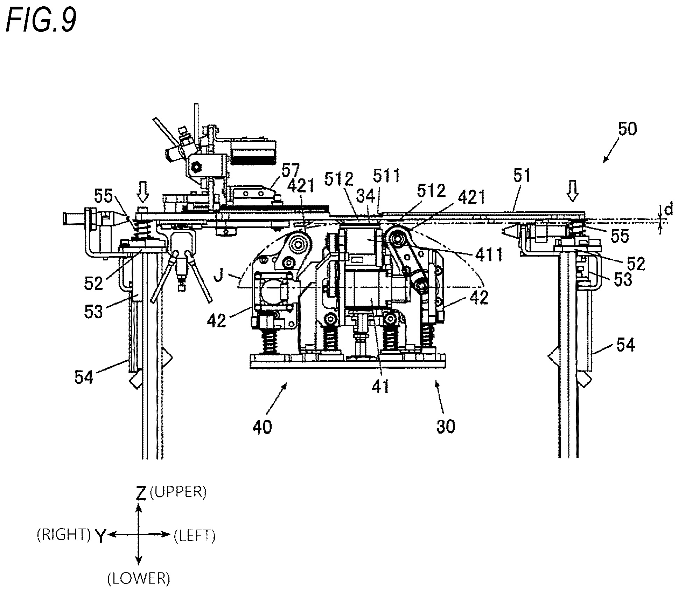

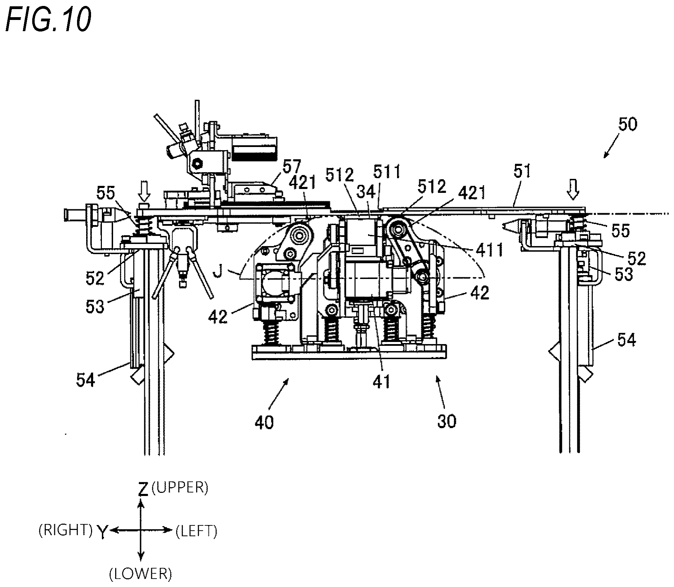

FIG. 9 shows a state of the clamp plate 51 when the lowering pressure of each clamp air cylinder 54 is at a low pressure, and FIG. 10 shows a state of the clamp plate 51 when the lowering pressure of each clamp air cylinder 54 is at a high pressure.

As shown in FIG. 9, when the lowering pressure of each clamp air cylinder 54 is at a low pressure, the lowered clamp plate 51 cannot withstand the upward pressing force received from the coil spring 55, so that a gap d is formed between the lower surface of the clamp plate 51 and the placement surface of the placement plate 34, and the base material J is brought into a state of being restrained by a small clamping force of the clamp or not restrained. The height of the clamp plate 51 at this time is referred to as a weak clamp position.

On the other hand, at this weak clamp position, each contact plate 512 of the clamp plate 51 contacts each of the rollers 411 and 421 or forms a very narrow gap with respect to each of the rollers 411 and 421. Therefore, when the base material J is placed on the placement plate 34, the base material J is pushed by each contact plate 512 into contact with each of the rollers 411 and 421 with an appropriate contact force such that the feed operation by the pair of X-axis roller mechanisms 41 or the pair of Y-axis roller mechanisms 42 can be performed properly.

In contrast, as shown in FIG. 10, when the lowering pressure of each clamp air cylinder 54 is at a high pressure, the lowered clamp plate 51 can allow the lower surface of the clamp plate 51 and the placement surface of the placement plate 34 to be brought into pressure contact with each other, against the coil spring 55. Therefore, when the base material J is placed on the placement plate 34, the base material J is firmly gripped by the clamp plate 51 and the placement plate 34 and fixedly held with a large restraining force. The height of the clamp plate 51 at this time is referred to as a strong clamp position.

Additionally, a lighting device 57 is provided on the upper surface of the clamp plate 51. The lighting device 57 irradiates illumination light from above the upper opening 511 when the camera 11 described below captures an image of the base material J through the work opening 341 from below the placement plate 34. The lighting device 57 is retracted to one end portion side of the clamp plate 51 during non-imaging, and is moved directly above the upper opening 511 by an actuator (not shown) to project light downward during imaging.

### [Hair Supply Device]

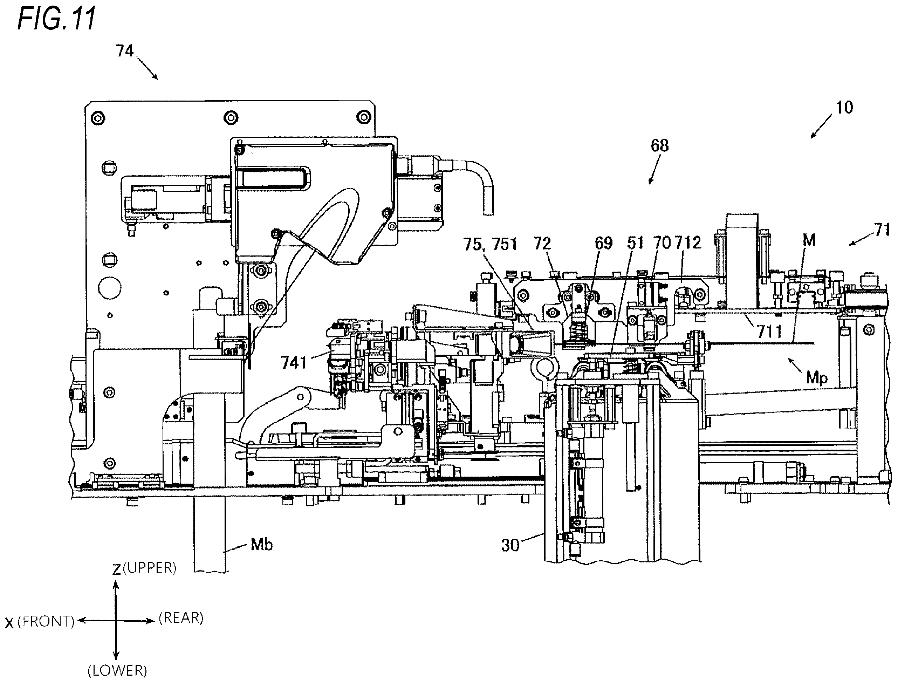

FIG. 11 is a right side view of the hair supply device 74 and the hair holding mechanism 68.

The hair supply device 74 is installed on the base 12 at a position on a front left side of the base stage 30.

The hair supply device 74 allows a spatula member to be inserted near an upper end portion of a bundle Mb of numerous hairs for planting M held upright along the vertical direction so as to separate several hairs for planting M, and further to be rotated so that the upper end portions of the separated hairs for planting M are tilted to face rearward.

In addition, the hair supply device 74 includes a head 741 that suctions and internally grips a tip portion of one of the plurality of tilted hairs M for planting, and conveys the head 741 rearward in the X-axis direction so that one hair for planting M can be pulled out straight rearward. In FIG. 11, reference sign Mp denotes a pull-out position of the hair for planting M targeted by the head 741 of the hair supply device 74.

Note that the hair supply device 74 includes a gripping mechanism (not shown) that grips a front end portion side of the hair for planting M pulled out by the head 741 to the pull-out position Mp.

### [Hair Holding Mechanism]

As shown in FIG. 11, The hair holding mechanism 68 is installed on the base 12 at a position located rearward of the hair supply device 74 and to the left of the base stage 30.

The hair holding mechanism 68 includes a first gripping mechanism 69 and a second gripping mechanism 70 that grip both end portions of the hair for planting M, respectively, a conveying mechanism 71 that supports and conveys the gripping mechanisms along the Y-axis, and a recovery device 75 that recovers the hair for planting M that remains in the first gripping mechanism 69 due to an error or the like.

The conveying mechanism 71 includes a movable body 711 having a flat plate shape along the X-Y plane, a support body 712 having an elongated flat plate shape and erected at a right end portion of the movable body 711, and a feed motor 716 serving as an actuator.

The support body 712 supports the first gripping mechanism 69 and the second gripping mechanism 70 arranged in the front-rear direction in the right plane.

The movable body 711 is conveyed along the Y-axis direction by driving of the feed motor 716, thereby allowing the first gripping mechanism 69 and the second gripping mechanism 70 to be arbitrarily moved and positioned along the Y-axis direction.

The first gripping mechanism 69 includes a structure similar to a thread tensioner device mounted on a sewing machine, two sliding plates that grip the hair for planting M with spring pressure, and a release mechanism 72 that switches a gripped state to a released state.

The two sliding plates are disk-shaped plates pivotally supported in a vertically overlapping state, and their outer circumferences are slightly bent backward to separate the sliding plates from each other, thereby forming a gap.

Therefore, when the two sliding plates are moved rightward by the conveying mechanism 71 with respect to the hair for planting M at the pull-out position Mp described above, the hair for planting M can enter through the gap between the two sliding plates and can be gripped.

The release mechanism 72 includes an insertion plate that can be inserted between the two sliding plates of the first grip mechanism 69 from the left, and a release air cylinder 724 that imparts a reciprocating motion to the insertion plate along the Y-axis.

The insertion plate is inserted between two sliding plates when advanced rightward by the release air cylinder 724, thereby opening the two sliding plates and switching the hair for planting M from a gripped state to a released state. The insertion plate has a length that reaches right ends of the two sliding plates, and can discharge rightward the hair for planting M gripped by the two sliding plates.

The second gripping mechanism 70 includes two gripping members that grip the hair for planting M, and gripping air cylinders 704 and 705 as lifting and lowering actuators for individually lifting and lowering the respective gripping members.

The two gripping members have flat extensions extending rightward, and are supported such that a lower surface of one extension and an upper surface of the other extension are aligned vertically.

One gripping member is supported so as to be switchable in position between upper and lower positions by the gripping air cylinder 704, and the other gripping member is supported so as to be switchable in position between upper and lower positions by the gripping air cylinder 705.

Therefore, the hair for planting M can be gripped by bringing the extensions of the two gripping members into pressure contact with each other with the gripping air cylinders 704 and 705, and the hair for planting M can be released by separating the extensions of the two gripping members.

The first gripping mechanism 69 and the second gripping mechanism 70 grip the hair for planting M supplied by the hair supply device 74 at a receiving position slightly to the right of a retraction position most leftward away from the base stage 30.

In addition, the first gripping mechanism 69 and the second gripping mechanism 70 move rightward from the receiving position and hold the hair for planting M at a supply position located above the upper opening 511 of the clamp plate 51. At the supply position, a knotting work (binding work) of the hair for planting M to the base material J is performed.

Furthermore, the first gripping mechanism 69 and the second gripping mechanism 70 perform, at a recovery position between the receiving position and the supply position in the Y-axis direction, a release operation of the hair for planting M by the first gripping mechanism 69 (with respect to the second gripping mechanism 70, the hair for planting M is released during the binding process of the hair for planting M).

At the recovery position, the hair for planting M that remains gripped by the first gripping mechanism 69 due to an error or the like in the work is recovered.

At the recovery position, the recovery device 75 for the hair for planting M is arranged.

The recovery device 75 includes a suction nozzle 751 expanded rearward, an intake blower 752 (see FIG. 2) in communication with the suction nozzle 751, and a trap (not shown) formed of a mesh or the like for repair of the hair for planting M and provided between the suction nozzle 751 and the intake blower 752.

The recovery device 75 drives the intake blower 752 when the release mechanism 72 is in operation, thereby suctioning and recovering the hair for planting M, if any, discharged from the first gripping mechanism 69.

### [Hair Planting Unit]

The first to third capture mechanisms 21 to 23 and the looper mechanism 24 constitute the hair planting unit 20 that knots and binds the hair for planting M to the base material J.

The first to third capture mechanisms 21 to 23 respectively include hook needles 211 to 231 each having a barb provided near a tip, ball screw mechanisms (not shown) for moving the hook needles forward and backward, and capture motors (not shown) serving as drive sources for lifting and lowering operations of the hook needles 211 to 231.

The first capture mechanism 21 is arranged below the work opening 341 of the placement plate 34, with the hook needle 211 oriented vertically upward. The placement plate 34 can move in the X-Y direction by the moving mechanism 25. The first capture mechanism 21 is arranged on the base 12 so that a center position of the work opening 341 and the hook needle 211 are aligned in a plan view, with the placement plate 34 positioned at a preset reference position by the moving mechanism 25. [0053] The second capture mechanism 22 is arranged above the upper opening 511 of the clamp plate 51, with the hook needle 221 oriented vertically downward.

The hook needle 221 of the second capture mechanism 22 is arranged above the base 12 so as to be slightly to the left of the hook needle 211 of the first capture mechanism 21 in a plan view. Note that, strictly, the second capture mechanism 22 is supported on a support plate (not shown) erected on the base 12.

The second capture mechanism 22 also includes an actuator that turns the hook needle 221. The first and third capture mechanisms 21 and 23 may also include actuators that turn the hook needles 211 and 231, respectively.

The third capture mechanism 23 is arranged above the upper opening 511 of the clamp plate 51 and behind the second capture mechanism 22, with the hook needle 231 oriented obliquely forward and downward.

The hook needle 231 of the third capture mechanism 23 is arranged above the base 12 so that its center line intersects a center line of the hook needle 221 of the second capture mechanism 22 at a position slightly above the placement surface of the placement plate 34. Note that, strictly, the third capture mechanism 23 is also supported on the support plate (not shown) erected on the base 12.

The looper mechanism 24 is arranged above the first capture mechanism 21 and below the lower surface of the placement plate 34.

The looper mechanism 24 includes a pair of arm portions 241 extended to the right to widen a loop of the hair for planting M pulled into the lower side of the base material J by the first capture mechanism 21. Additionally, the looper mechanism 24 includes an actuator that separates tip portions of the pair of arm portions 241 in the X-axis direction, and an actuator that moves the pair of arm portions 241 along the Y-axis direction.

The configuration of the hair planting unit 20 and the binding operation of the hair for planting M to the base material J are substantially the same as those disclosed in JP2018-040084A. Therefore, reference is made to the above publication for the details of the configuration of the hair planting unit 20 and the binding operation of the hair for planting M to the base material J, and only a brief description will be provided herein.

FIGS. 12A to 14B are explanatory diagrams of the binding operation of the hair for planting M. FIGS. 12A, 13A, and 14A show the periphery of the looper mechanism 24 in a right side view, and FIGS. 12B, 13B, and 14B show the periphery in a rear view.

In addition, in each drawing, the first gripping mechanism 69 and the second gripping mechanism 70 described above are schematically shown, but for the sake of explanation, they are shown smaller in size than in reality and closer to the looper mechanism 24 than in reality.

In the binding operation of the hair for planting M, as shown in FIGS. 12A and 12B, the hair for planting M is supported along the front-rear direction by the first gripping mechanism 69 and the second gripping mechanism 70 on the upper side of the base material J held on the upper surface of the placement plate 34.

In this state, the hook needle 211 of the first capture mechanism 21 advances and retracts from below through the mesh hole H1 of the base material J, captures the hair for planting M, and pulls it into the mesh hole H1 to form a loop.

Furthermore, the pair of arm portions 241 of the looper mechanism 24 is allowed to enter the loop of the hair for planting M by rightward movement, and moves leftward while opening the pair of arm portions 241 to pull the loop to the lower side of the adjacent mesh hole H2 on the left.

Then, the hook needle 221 of the second capture mechanism 22 advances and retracts from above through the mesh hole H2 of the base material J, captures the loop of the hair for planting M, and pulls it into the mesh hole H2 to form a small loop on the upper side of the base material J.

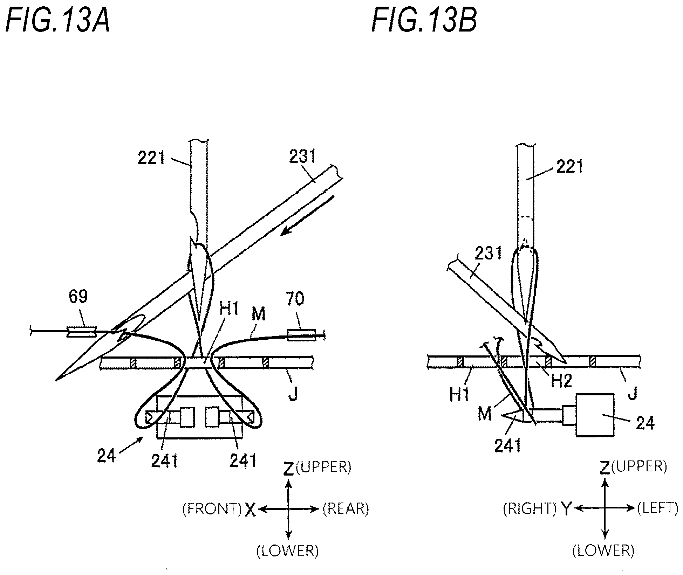

Then, as shown in FIGS. 13A and 13B, the hook needle 221 of the second capture mechanism 22 turns to impart a twist to the small loop, and the hook needle 231 of the third capture mechanism 23 advances from an obliquely rearward and upward direction, enters the small loop, and captures an end portion of the hair for planting M on the first gripping mechanism 69 side.

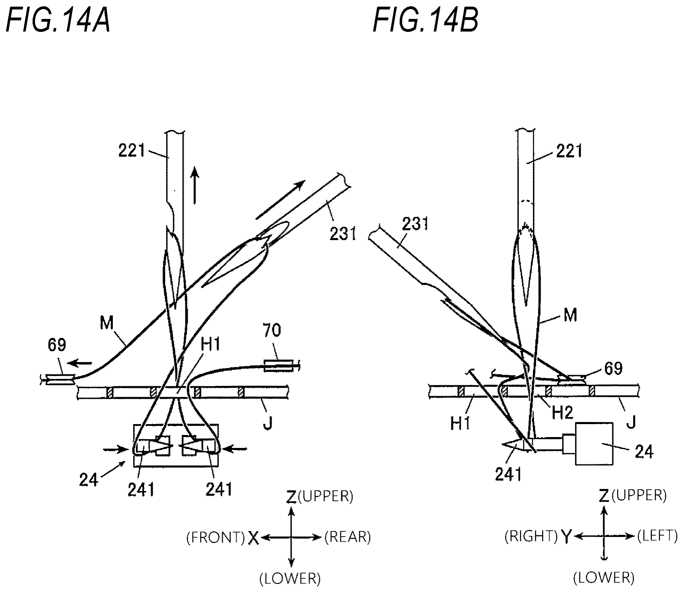

Then, as shown in FIGS. 14A and 14B, the hook needle 231 of the third capture mechanism 23 retracts to insert the entire end portion on the first gripping mechanism 69 side into the small loop of the hair for planting M, the hook needle 221 of the second capture mechanism 22 comes out of the small loop, and the looper mechanism 24 moves the pair of arm portions 241 leftward to release the hair for planting M.

A terminal end of the hair for planting M is pulled out from the first gripping mechanism 69 while sliding, and passes through the small loop. Furthermore, the hair for planting M is tensioned by the hook needle 231 until it is knotted to a boundary portion between the mesh hole H1 and the mesh hole H2, and the second gripping mechanism 70 releases the hair for planting M, whereby the binding operation of the hair for planting M is completed.

Note that the hook needle 231 of the third capture mechanism 23 may be provided with a gripping mechanism for holding the captured state of the hair for planting M.

### [Auxiliary Clamp Mechanism]

As shown in FIG. 3, the auxiliary clamp mechanisms 62 are provided on both sides of the base stage 30 in the X-axis direction, respectively. The two auxiliary clamp mechanisms 62 are arranged to individually face the two X-axis roller mechanisms 41.

Each of the auxiliary clamp mechanisms 62 includes an auxiliary clamp plate 621 provided to be tiltable, and an auxiliary clamp air cylinder 622 for tilting the auxiliary clamp plate 621.

The auxiliary clamp plate 621 is formed as a flat plate having a base end portion tiltably supported about the Y-axis and a tip portion in contact with the outer circumferential surface of the roller 411 of the X-axis roller mechanism 41.

The auxiliary clamp air cylinder 622 applies tilting force in a direction in which the tip portion of the auxiliary clamp plate 621 comes into contact with the outer circumferential surface of the roller 411. As a result, the base material J placed on the placement plate 34 is sandwiched and held between the X-axis roller mechanism 41 and the tip portion of the auxiliary clamp plate 621.

For example, the two auxiliary clamp mechanisms 62 are provided to press the base material J so as to prevent misalignment of the base material J with respect to the placement plate 34, when the clamp plate 51 of the clamp device 50 is set to the lifted position and the base material J on the placement plate 34 is released.

When the base material J is clamped by the two auxiliary clamp mechanisms 62, the base material J is likely to become slack due to the pressing by the tip portion of the auxiliary clamp plate 621. Therefore, it is preferable to simultaneously perform the tension applying control by the pair of X-axis roller mechanisms 41 described above.

### [Wiper Mechanism]

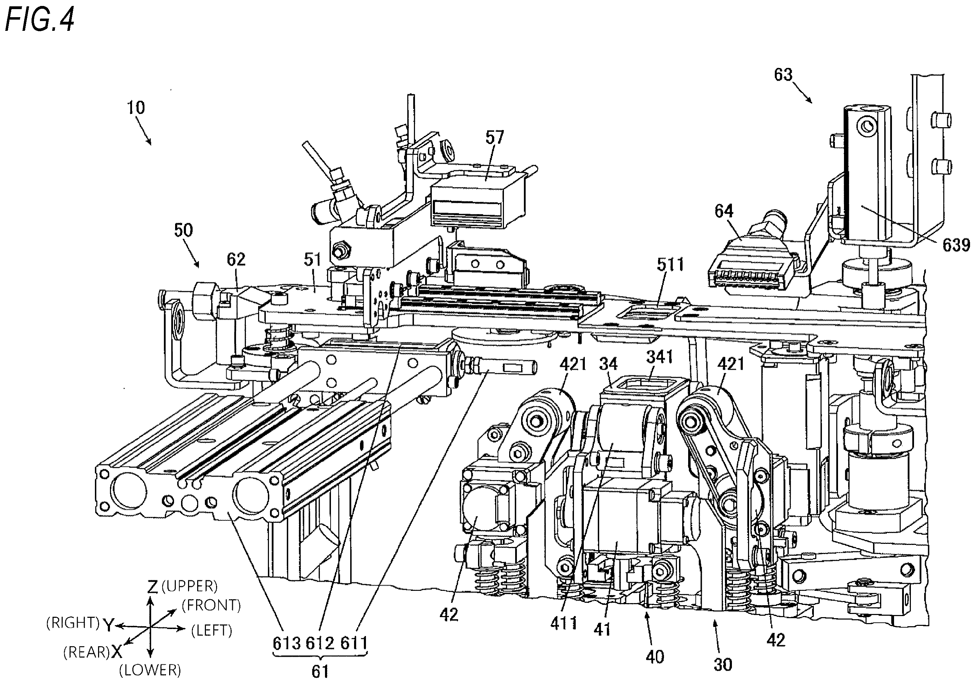

As shown in FIGS. 3 and 4, the wiper mechanism 61 is a mechanism for sweeping the hair for planting M bound to the base material J.

As described above, the operation of planting hair to the base material J is performed through the work opening 341 and the upper opening 511 while the base material J is held by the clamp plate 51.

In this case, each hair for planting M bound to the base material J protrudes upward of the clamp plate 51 through the upper opening 511.

On the other hand, when the planting of the hair for planting M is completed in one section in the work opening 341 of the placement plate 34 in the base material J, the clamp plate 51 is lifted to the weak clamp position, and the feed device 40 performs the feed operation of the base material J such that an adjacent section is within the work opening 341.

Then, if each hair for planting M that has been planted remains inserted in the upper opening 511, it may possibly affect the feed operation of the base material J, the binding operation of the hair for planting M in the next section, the image capturing of a new section through the work opening 341, and the like.

Therefore, the clamp plate 51 is lifted to the lifted position, and the operation of sweeping, with the wiper mechanism 61, the hair for planting M bound to the base material J below the clamp plate 51 and sweeping out each hair for planting M from the upper opening 511 is performed.

Note that the operation of feeding the base material J and the operation of sweeping out the hair for planting M may be performed in reverse order.

As shown in FIG. 3, the wiper mechanism 61 is arranged on a rear right side of the mounting plate 34 in a plan view. In addition, the wiper mechanism 61 is arranged lower than the clamp plate 51 at the lifted position and higher than the placement plate 34.

The wiper mechanism 61 includes a rod-shaped wiper member 611 that sweeps each hair for planting M, a telescopic air cylinder 612 that extends and contracts the wiper member 611, and a sweeping-out air cylinder 613 that moves the wiper member 611 forward and rearward for sweeping-out.

The wiper member 611 has a round rod shape along the Y-axis direction and extends leftward from the telescopic air cylinder 612.

The telescopic air cylinder 612 is supported by the sweeping-out air cylinder 613 so that a plunger moving forward and rearward is parallel to the Y-axis direction. The plunger of the telescopic air cylinder 612 is directly connected to the wiper member 611 in the extending direction thereof and can switch between a state in which the wiper member 611 is contracted rightward and a state in which the wiper member 611 is extended leftward.

In the contracted state, the wiper member 611 is positioned to the right of the placement plate 34, and in the extended state, the wiper member 611 overlaps the placement plate 34 in the Y-axis direction.

The sweeping-out air cylinder 613 is supported by the base 12 so that the plunger is parallel to the X-axis direction. The telescopic air cylinder 612 can be supported at the tip portion of the plunger, and the wiper member 611 can be moved forward of the placement plate 34 when the plunger is advanced, and rearward of the placement plate 34 when the plunger is retracted.

With the above configuration, when binding the hair for planting M to one section in the work opening 341 of the placement plate 34 is completed and the clamp plate 51 is lifted to the lifted position, the wiper mechanism 61 advances the wiper member 611 by the sweeping-out air cylinder 613, extends the wiper member 611 by the telescopic air cylinder 612, and then retracts the wiper member 611 by the sweeping-out air cylinder 613.

As a result, the wiper member 611 can pass between the work opening 341 of the placement plate 34 and the upper opening 511 of the clamp plate 51, sweep each hair for planting M rearward, and sweep it out through the upper opening 511.

Note that the wiper member 611 may take any form as long as it can sweep the hair for planting M. For example, the wiper member 611 is not limited to a round rod shape and may take the shape of a plate or a brush.

### [First Blower Mechanism]

The first blower mechanism 64 has a nozzle connected to a pneumatic supply source. As shown in FIGS. 3 and 4, the first blower mechanism 64 is arranged forward of and slightly above the placement plate 34, and below the clamp plate 51 at the lifted position, and blows air obliquely rearward and downward toward the placement plate 34 side.

As described above, the hair for planting M collectively swept rearward by the wiper mechanism 61 tends to rise upward of the base material J from the state of being swept rearward due to the elasticity thereof. In this case, when clamping the base material J to a new section by the clamp device 50, there is a risk that the hair for planting M will be caught between the placement plate 34 and the clamp plate 51.

For this reason, the first blower mechanism 64 blows air to the hair for planting M swept rearward by the wiper mechanism 61 so that the hair does not rise.

### [Second Blower Mechanism]

The second blower mechanism 65 has a nozzle connected to a pneumatic supply source. As shown in FIG. 1, the second blower mechanism 65 is provided at each of both end portions of the clamp plate 51 in the Y-axis direction, and each of the second blower mechanisms 65 blows air toward the placement plate 34 side, on the lower side of the clamp plate 51.

These second blower mechanisms 65 have a function of blowing air to press the base material J against the cover member 35 and the respective rollers 411 and 421 when the clamp plate 51 is lifted to release the base material J on the placement plate 34.

In addition, the second blower mechanisms 65 have a function of blowing air toward the downstream side in the feed direction of the base material J to push the hair for planting M toward the downstream side in the feed direction of the base material J when the feed device 40 feeds the base material J such that the adjacent section in the Y-axis direction is within the work opening 341, and the wiper mechanism 61 performs the sweeping operation.

### [Camera]

As shown in FIG. 1, the camera 11 captures an image of the base material J from below the placement plate 34 through the work opening 341. The camera 11 includes an image sensor such as a charge-coupled device (CCD) or a complementary metal oxide semiconductor (CMOS) and an optical system.

The camera 11 is supported by the position switch mechanism 28 (see FIG. 2) together with the first capture mechanism 21. The camera 11 and the first capture mechanism 21 can be switched in position by a position switch air cylinder 283 of the position switch mechanism 28 between a state in which an optical axis of the camera 11 is aligned with the center line along the Z-axis direction passing through the center of the work opening 341 and a state in which the center line of the hook needle held by the first capture mechanism 21 is aligned with the center line.

Note that the position switch mechanism 28 is installed directly on the base 12 and does not cause movement on the base 12. In contrast, the placement plate 34 is installed on the base 12 via the moving mechanism 25. Therefore, in a plan view, the placement plate 34 is relatively movable in the X-axis direction and the Y-axis direction with respect to the position switch mechanism 28. For this reason, the "center of the work opening 341" refers to the center of the work opening 341 in a state in which the placement plate 34 is positioned at the center of the movable range by the moving mechanism 25 (as the reference position of the placement plate 34).

### [Correction Mechanism]

The base material J is a mesh material with mesh holes aligned and developed on its surface. For example, the base material J of the present embodiment has hexagonal mesh holes aligned. When performing the operation of sequentially binding the hair for planting M to each mesh hole of the base material J, the alignment direction of the mesh holes is held on the placement plate 34 so as to be parallel to the X-axis or Y-axis direction, which is the feed direction of the feed device 40.

However, the alignment direction of the mesh holes may be inclined due to a variety of factors, such as when displacement occurs due to sliding of the base material J during feeding, when the base material J is not planar but has a three-dimensional shape or is made of a soft material that is easily deformable, and the like.

The inclination of the mesh holes of the base material J can be detected from the image captured by the camera 11.

When the inclination of the mesh holes of the base material J exceeds an allowable value, the orientation of the base material J on the base stage 30 can be corrected by the correction mechanism 63, which rotates the base material J about the Z-axis with respect to the camera 11 by the correction mechanism 63.

The correction mechanism 63 is arranged in front of the placement plate 34, as shown in FIGS. 3 to 5. The correction mechanism 63 includes a support shaft 632 rotatably supported around the Z-axis by a bracket 631 installed on the base 12, an arm 633 fixed to an upper end portion of the support shaft 632, a disc-shaped pressing plate 634 provided at a tip portion of the arm 633, a correction motor 635 (see FIG. 2 ) that rotates the pressing plate 634 via a belt mechanism, and an arm turning air cylinder 636 (see FIG. 2 ) that imparts rotational motion to the support shaft 632.

The support shaft 632 is supported along the Z-axis direction by the bracket 631.

The arm 633 is connected to the support shaft 632 via a spline nut 637. That is, the arm 633 can be moved along the support shaft 632 and rotated around the Z-axis together with the support shaft 632 by the spline nut 637.

In addition, the arm 633 is pressed upward by a coil spring 638, which is an elastic member, via the spline nut 637.

The pressing plate 634 provided on a lower surface side of the tip portion of the arm 633 is rotatably supported around the Z-axis at the tip portion of the arm 633. The pressing plate 634 is imparted with rotational motion from the correction motor 635 by a belt mechanism provided on the upper surface side of the arm 633. In addition, the lower surface side of the pressing plate 634 contacts the base material J placed on the base stage 30 from above, so that the rotation of the pressing plate 634 can be imparted to the base material J.

In addition, the arm 633 is always pressed upward by the coil spring 638, thereby keeping the pressing plate 634 at a height away from the base material J on the base stage 30.

A pressing air cylinder 639 for lowering the arm 633 against the coil spring 638 is arranged in parallel with the arm 633, and when performing correction by rotation of the base material J, the pressing plate 634 can be lowered to contact the base material J on the placement plate 34.

In addition, the arm turning air cylinder 636 inputs rotational motion to the support shaft 632 via a link member (not shown) provided at a lower end portion of the support shaft 632.

By the rotational motion input from the arm turning air cylinder 636, the arm 633 can move the pressing plate 634 between a retraction position in front of the placement plate 34 and a pressing position directly above the placement plate 34.

### [Control System of Hair Planting Apparatus: Control Device]

As shown in FIG. 2, the control device 100 of the hair planting apparatus 10 includes a read only memory (ROM) 102 that stores a program for controlling a hair planting operation, a random access memory (RAM) 103 serving as a work area for arithmetic processing, a nonvolatile data memory 104 which serves as a storage means for storing various setting data or the like and to which the setting data can be rewritten, and a central processing unit (CPU) 101 that executes programs in the ROM 102.

In addition, the CPU 101 is connected to the first to third capture mechanisms 21 to 23, the looper mechanism 24, and the moving mechanism 25 that constitute the hair planting unit 20.

Each of the first to third capture mechanisms 21 to 23 includes a capture motor serving as a drive source for advancing and retracting operations of each of the hook needles 211 to 231, and the CPU 101 controls their operations through a drive circuit (not shown) that operates them.

The looper mechanism 24 includes a plurality of actuators, and the CPU 101 controls the operation of the looper mechanism 24 through a drive circuit (not shown) that operates the actuators.

The moving mechanism 25 includes the X-axis stage 26 and the Y-axis stage 27, and the CPU 101 controls the operations of the X-axis stage 26 and the Y-axis stage 27 through a drive circuit (not shown) that operates the X-axis motor 263 of the X-axis stage 26 and the Y-axis motor 273 of the Y-axis stage 27.

In addition, the CPU 101 is connected to the position switch mechanism 28 that switches the positions of the camera 11 and the first capture mechanism 21, and controls the position switch air cylinder 283 through an electromagnetic valve (not shown).

In addition, the CPU 101 is connected to the X-axis roller mechanism 41, controls the X-axis feed motor 412 through a drive circuit (not shown), and controls the retraction air cylinder 416 through an electromagnetic valve (not shown).

Similarly, the CPU 101 is connected to the Y-axis roller mechanism 42, controls the Y-axis feed motor 422 through a drive circuit (not shown), and controls the retraction air cylinder 426 through an electromagnetic valve (not shown).

Note that, although two X-axis roller mechanisms 41 and two Y-axis roller mechanisms 42 are provided, FIG. 2 shows only one of them, respectively.

In addition, the CPU 101 is connected to the clamp device 50, controls the clamp air cylinder 54 through an electromagnetic valve (not shown), and controls the strength of the air pressure supplied to the clamp air cylinder 54 by the regulator 56.

In addition, the CPU 101 is connected to the lighting device 57, switches ON/OFF of illumination light irradiation, and controls an actuator to move the lighting device 57 to a predetermined position.

In addition, the CPU 101 is connected to the wiper mechanism 61 and controls the telescopic air cylinder 612 and the sweeping-out air cylinder 613 through electromagnetic valves (not shown) connected to each thereof.

In addition, the CPU 101 is connected to the auxiliary clamp mechanism 62 and controls the auxiliary clamp air cylinder 622 through an electromagnetic valve (not shown).
Note that, although two auxiliary clamp mechanisms 62 are provided, only one is shown in FIG.2.

In addition, the CPU 101 is connected to the correction mechanism 63, controls the correction motor 635 through a drive circuit (not shown), and controls the arm turning air cylinder 636 and the pressing air cylinder 639 through electromagnetic valves (not shown) connected to each thereof.

In addition, both the first blower mechanism 64 and the second blower mechanism 65 include electromagnetic valves for supplying high-pressure air to the nozzles, and the CPU 101 controls each electromagnetic valve to control discharge of the air.

In addition, the CPU 101 is connected to the hair holding mechanism 68, controls the conveying motor 716 through a drive circuit (not shown), controls the gripping air cylinders 704 and 705 and the release air cylinder 724 through electromagnetic valves (not show) connected to each thereof, and controls the intake blower 752 through a drive circuit (not shown).

In addition, the CPU 101 is connected to the camera 11 and controls the execution of image capturing of the base material J.

In addition, the CPU 101 is connected to a pedal 14 for inputting the start of the hair planting operation.

In addition, CPU 101 is connected to an operation panel 15 having a function as a display unit for displaying various information and a function as an input unit for performing various inputs.

In addition, the CPU 101 includes software modules such as an image acquisition unit 105, a transformation matrix acquisition unit 106, a difference processing unit 107, and a hair detection unit 108. Note that part or all of the software modules may be implemented by hardware.

The functions of the software modules described above will be appropriately described in the operation control of the hair planting operation by the hair planting apparatus 10 described below.

Note that the CPU 101 controls various air cylinders, various motors, various actuators, and the like through electromagnetic valves, drive circuits, interfaces, and the like. However, in the following description, descriptions of the electromagnetic valves, drive circuits, and interfaces will be omitted, and it will simply be described that various air cylinders, various motors, various actuators, and the like are controlled.

### [Hair Planting Operation Control]

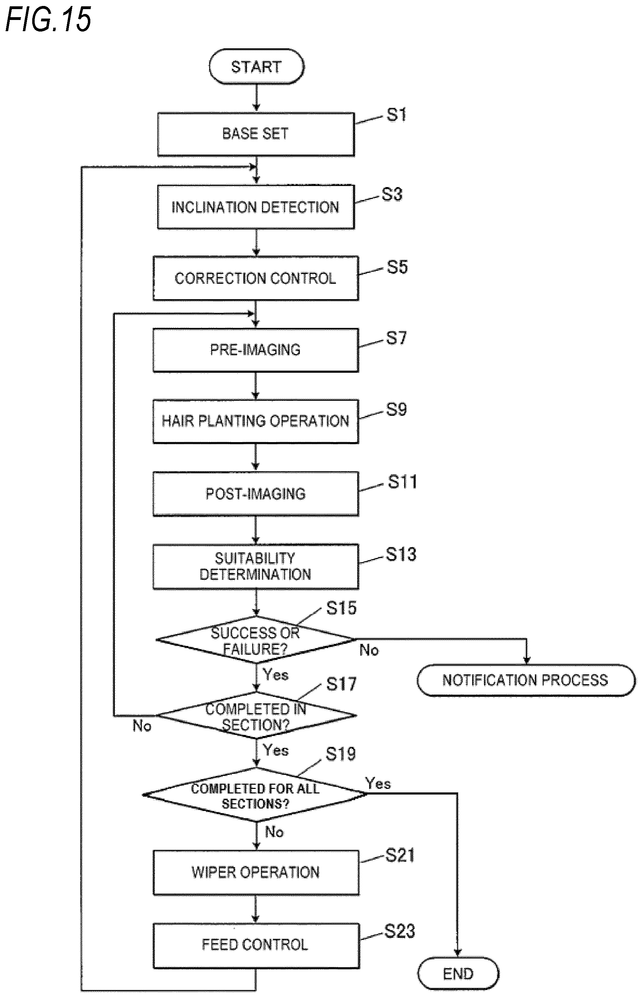

The overall flow of operation control of the hair planting operation executed by the CPU 101 is shown in a flow chart of FIG. 15.

First, as a preliminary preparation, the CPU 101 controls the clamp air cylinder 54 of the clamp device 50 to move the clamp plate 51 to the lifted position, and controls the auxiliary clamp air cylinders 622 of the respective auxiliary clamp mechanisms 62 to move the auxiliary clamp plates 621 to the released position spaced from the X-axis roller mechanism 41.

Then, the CPU 101 executes a step of base set (step S1).

That is, when the base material J is placed on the placement plate 34 of the base stage 30 and the start of the hair planting operation is input from the pedal 14, the CPU 101 supplies low-pressure air to the clamp air cylinder 54 by the regulator 56 and lowers the clamp plate 51 to the weak clamp position.

Next, the CPU 101 executes a step of inclination detection (step S3).

That is, the CPU 101 controls the position switch air cylinder 283 of the position switch mechanism 28 to position the camera 11 such that the optical axis of the camera 11 coincides with the center of the work opening 341 at the reference position.

In addition, the CPU 101 controls the lighting device 57 to move above the upper opening 511 and to irradiate illumination light downward.

In addition, the camera 11 captures an image of the base material J within the range of the work opening 341, and the CPU 101 extracts a plurality of mesh holes developed on the surface of the base material J from the captured image, and detects a centroid point g of each mesh hole.

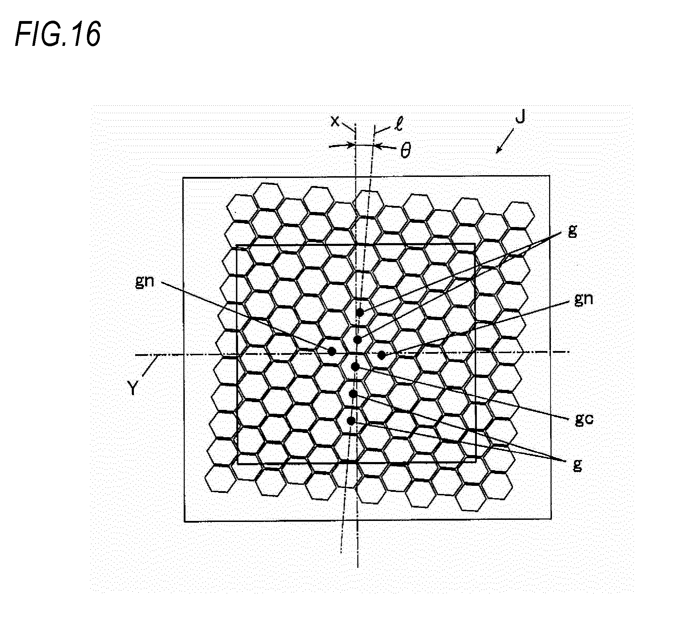

FIG. 16 shows an example of an image captured by the camera 11.

As shown in FIG. 16, the CPU 101 specifies a centroid point gc closest to the center of the camera (the optical axis of the camera 11), and further specifies two centroid points g adjacent in sequence above and two centroid points g adjacent in sequence below the centroid point gc such that the centroid points are linearly aligned and the total number of points is five, which is the reference number of points. The term "adjacent" herein refers to a state of being adjacent to each other at the closest interval. In addition, the "closest interval" refers to the interval between the centroid points of mesh holes that are adjacent with their sides in contact, for example, in the case of mesh holes of a regular polygon such as a regular hexagon.

Note that, when there is no particular need to distinguish a specific centroid point gc or a centroid point gn described below, from the other centroid points g, these will also be simply referred to as the "centroid point g".

Then, the CPU 101 obtains an inclination angle θ of the straight line I passing through the five vertically adjacent centroid points g with respect to the X-axis direction (vertical direction in the image). This is an inclination of the base material J.

If the inclination angle θ is within an allowable range, the base material J is determined to be not inclined, and if the inclination angle θ exceeds the allowable range, the base material J is determined to be inclined.

Additionally, a case may occur in which the mesh holes or the centroid points are not favorably detected, and only a number of centroid points g smaller than the reference number of points can be detected. In this case, the CPU 101 considers a centroid point gn of a mesh hole adjacent in one Y-axis direction to the mesh hole of the centroid point gc as a new centroid point gc, detects five centroid points g including the centroid point gn adjacent in the X-axis direction, and performs determination of inclination.

In addition, when five centroid points g cannot be obtained for the centroid point gn, attempts to acquire five centroid points g for the centroid point gn are performed up to a specified maximum number of times (e.g., twice on each of the left and right sides) with respect to both sides in the Y-axis direction of the original centroid point gc, and when five centroid points g still cannot be obtained, the inclination detection is stopped. In this case, an error may be notified and the hair planting operation may be interrupted, or the step of inclination detection and the next step of correction control may be skipped and the subsequent hair planting operation may be continued. Note that, if continued, the hair planting operation is performed with slightly lower accuracy.

Next, the CPU 101 executes a step of correction control (step S5). The correction control is performed when it is determined in step S3 that the base material J is inclined. In addition, when it is determined that there is no inclination, this step is skipped.

As the correction control, the CPU 101 controls the correction mechanism 63, and rotates the base material J in a direction in which the detected inclination angle is corrected, by the correction motor 635 that holds the base material J from above with the pressing plate 634. Before and after the inclination correction, the slack of the base material J may be eliminated by the tension applying control by the feed device 40.

Then, the CPU 101 lowers the clamp plate 51 of the clamp device 50 to the weak clamp position and lifts each of the rollers 411 and 421 of the feed device 40 to the feed position.

Next, the CPU 101 functions as an image acquisition unit 105 and, before the hair planting operation, performs a pre-imaging step in which the camera 11 captures an image of the base material J within the range of the work opening 341 of the placement plate 34 (step S7).

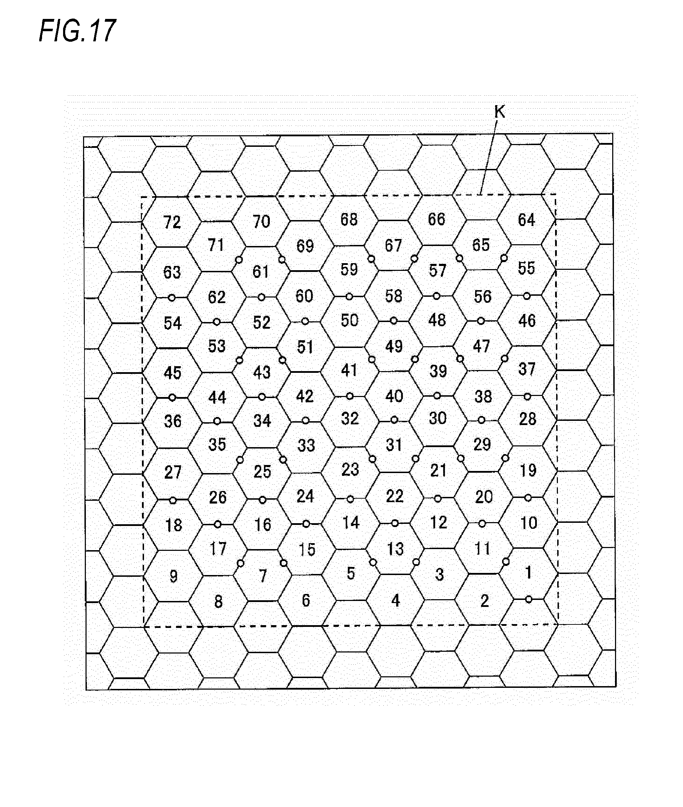

Here, the hair planting pattern data stored in advance in the data memory 104 will be described based on FIG. 17. The hair planting pattern data is data in which settings are defined for the hair planting operations for a plurality of mesh holes included in one unit section within the range of the work opening 341.

As shown, in the hair planting pattern data, a plurality of hair planting positions are set along with the order of hair planting at respective positions on a plane where all of the mesh holes are regular hexagons arranged at uniform intervals. Reference sign K in the drawing indicates the unit section described above. Within the unit section K, seventy-two mesh holes are present, and the hair planting position is indicated by a mark '∘' for each mesh hole. For each hair planting position, the order of hair planting is also defined.

In the pre-imaging step, the moving mechanism 25 is controlled according to the hair planting pattern data such that the mesh hole to be subjected to hair planting is positioned at the center of the imaging range, and in this state, the camera 11 performs imaging.

The image acquisition unit 105 performs the imaging to acquire a pre-image of a mesh targeted for hair planting of the base material J captured before hair planting.

In this case as well, similar to the imaging operation described above, the image acquisition unit 105 positions the camera 11 by the position switch mechanism 28, irradiates illumination light by the lighting device 57, and captures an image of the base material J within the range of the work opening 341 by the camera 11. The imaging data acquired by this imaging is stored in the data memory 104 as pre-image data.

Subsequently, the CPU 101 executes a hair planting operation step (step S9). In the hair planting operation step, the CPU 101 controls the position switch air cylinder 283 to arrange the first capture mechanism 21 at a reference position, and performs a supply operation of the hair for planting M.

That is, the CPU 101 causes the hair supply device 74 to pull out one hair for planting M and causes the hair holding mechanism 68 to grip it, and further causes the conveying mechanism 71 to place the hair for planting M in standby above the first capture mechanism 21 at the reference position.

Then, the CPU 101 controls the hair planting unit 20 to perform a binding operation of the hair for planting M to the base material J. Since the binding operation has been described with reference to FIGS. 12A to 14B, the details thereof are omitted here.

Subsequently, the CPU 101 again functions as the image acquisition unit 105, and after the hair planting operation, performs a post-imaging step in which the camera 11 captures the same position as that of the pre-imaging of the base material J within the range of the work opening 341 of the placement plate 34 (step S11).

The image acquisition unit 105 performs the imaging to acquire a post-image of the mesh targeted for hair planting of the base material J captured after hair planting.

In this case as well, similar to the imaging operation described above, the image acquisition unit 105 positions the camera 11 by the position switch mechanism 28, irradiates illumination light by the lighting device 57, and captures an image of the base material J within the range of the work opening 341 by the camera 11. The imaging data acquired by this imaging is stored in the data memory 104 as post-image data.

Subsequently, when the pre-image data and the post-image data before and after the hair planting operation are acquired by the image acquisition unit 105, a suitability determination process is executed.

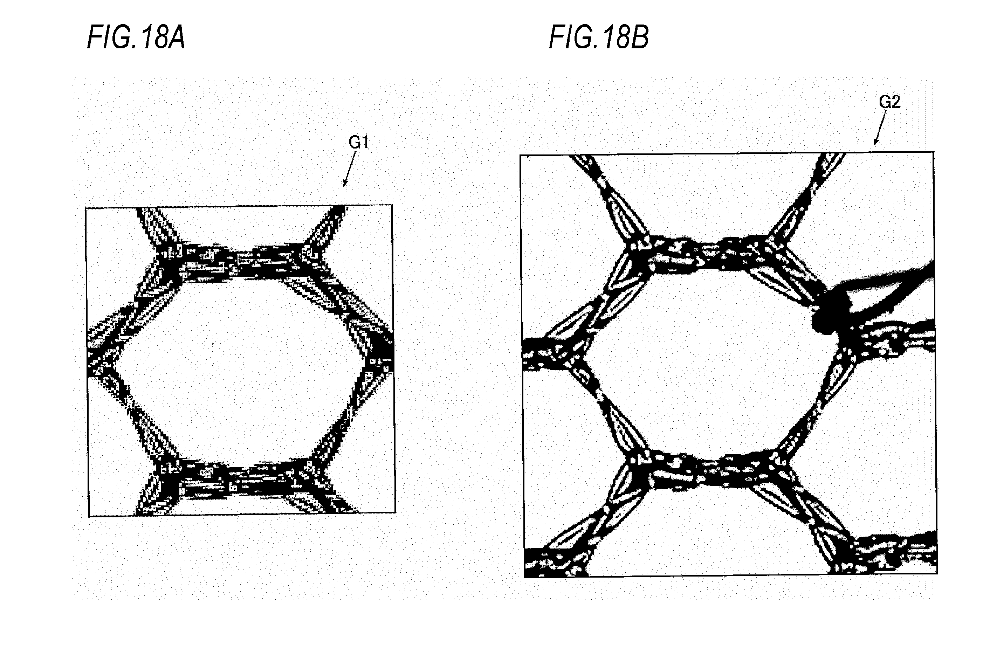

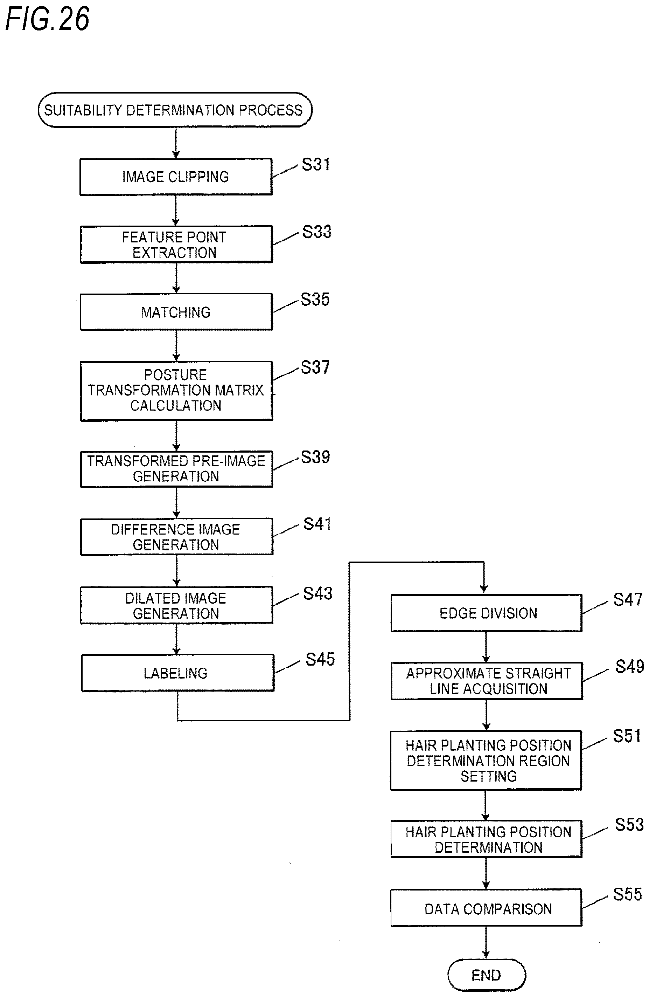

The suitability determination process will be described with reference to FIGS. 18A to 26. FIG. 26 is a flow chart showing contents of a suitability determination process.

In the suitability determination process, from the pre-image data and the post-image data, respectively, one mesh targeted for hair planting is trimmed around its periphery and extracted (image clipping step: step S31). FIG. 18A is a mesh image based on pre-image data (hereinafter, referred to as pre-image G1), and FIG. 18B is a mesh image based on post-image data (hereinafter, referred to as post-image G2). As can be seen by comparing these images, when the hair for planting M is planted into one mesh, the mesh undergoes changes in its shape, posture, position, orientation, and so on, for example due to tension received from the hair for planting M.

For this reason, it is difficult to accurately obtain the presence or absence, the position, and the like of the hair for planting M that has been planted through a simple comparison process such as taking a difference between the pre-image G1 and the post-image G2.

Therefore, the CPU 101 functions as a transformation matrix acquisition unit 106 and executes a transformation matrix acquisition step.

That is, the transformation matrix acquisition unit 106 executes feature point extraction with respect to the pre-image G1 and the post-image G2 (feature point extraction step: step S33).

The transformation matrix acquisition unit 106 executes a matching process between a plurality of feature points extracted from the pre-image G1 and a plurality of feature points extracted from the post-image G2 (matching step: step S35).

Subsequently, the transformation matrix acquisition unit 106 selects, from among the numerous pairs of feature points of the pre-image G1 and the post-image G2 that have been matched, a plurality of pairs having higher matching scores.

In addition, the transformation matrix acquisition unit 106 calculates, from the position coordinates in the images of the respective selected feature points, a transformation matrix for performing a posture transformation from the pre-image G1 to the post-image G2 (transformation matrix calculation step: step S37).

This transformation matrix may be any matrix that performs a transformation mapping from one plane to another. For example, the transformation matrix may be a homography transformation matrix. The homography transformation matrix can, in theory, be obtained if four pairs of feature points are given.

Subsequently, the CPU 101 functions as a difference processing unit 107 and executes a difference step.

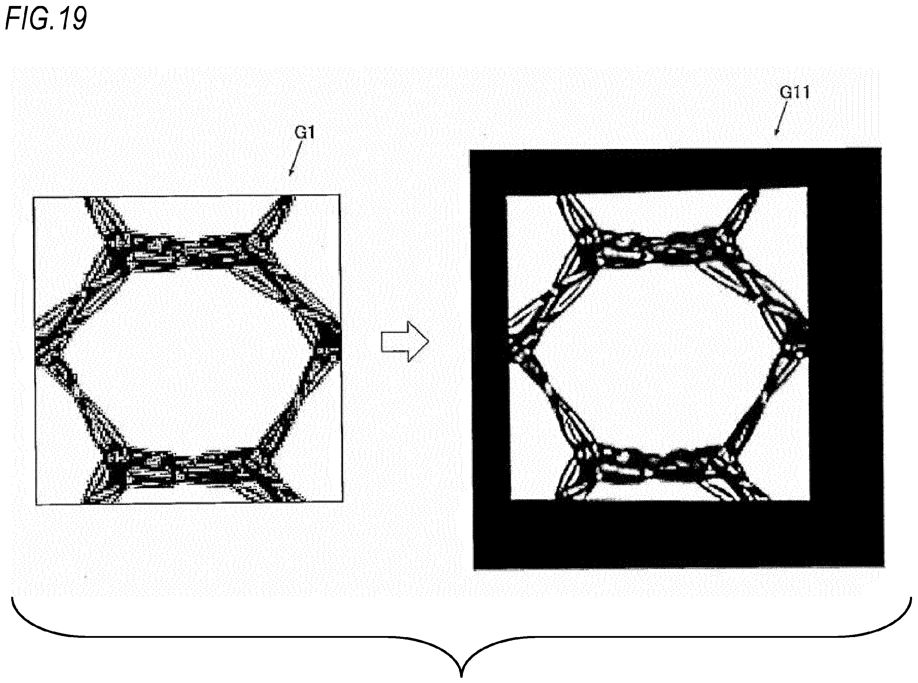

That is, the difference processing unit 107 performs a transformation based on the transformation matrix obtained in step S37 on the data of the pre-image G1, and generates a transformed pre-image G11 by performing a posture transformation from the pre-image G1 to the post-image G2 (transformed pre-image generation step: step S39). FIG. 19 shows the pre-image G1 and a transformed pre-image G11 generated from the pre-image G1.

The transformed pre-image G11 is an image that pseudo-represents a state in which the mesh targeted for hair planting has undergone a change in posture due to tension received from the hair for planting M that has been planted. Since the pre-image G1, which serves as the source of the transformation, does not include the hair for planting M, the transformed pre-image G11 also naturally does not include the hair for planting M, and is an image including only the mesh that has undergone a change in posture due to the hair for planting M.

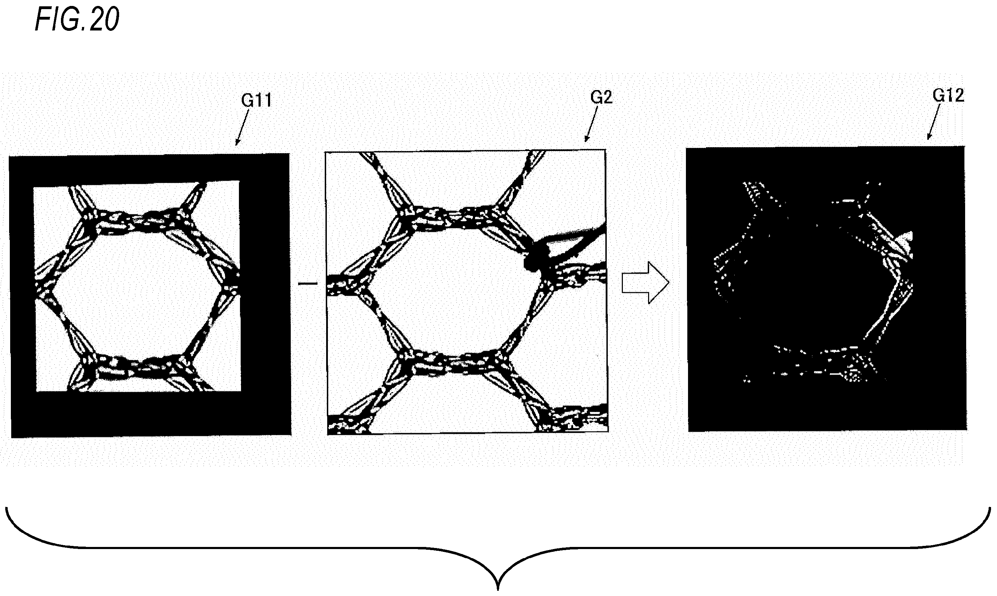

Subsequently, the difference processing unit 107 obtains a difference image G12 by taking a difference between the data of the transformed pre-image G11 and the data of the post-image G2 (difference image generation step: step S41). FIG. 20 shows a difference image G12 generated by taking a difference between the data of the transformed pre-image G11 and the data of the post-image G2.

Subsequently, the CPU 101 functions as a hair detection unit 108 and executes a hair detection step.

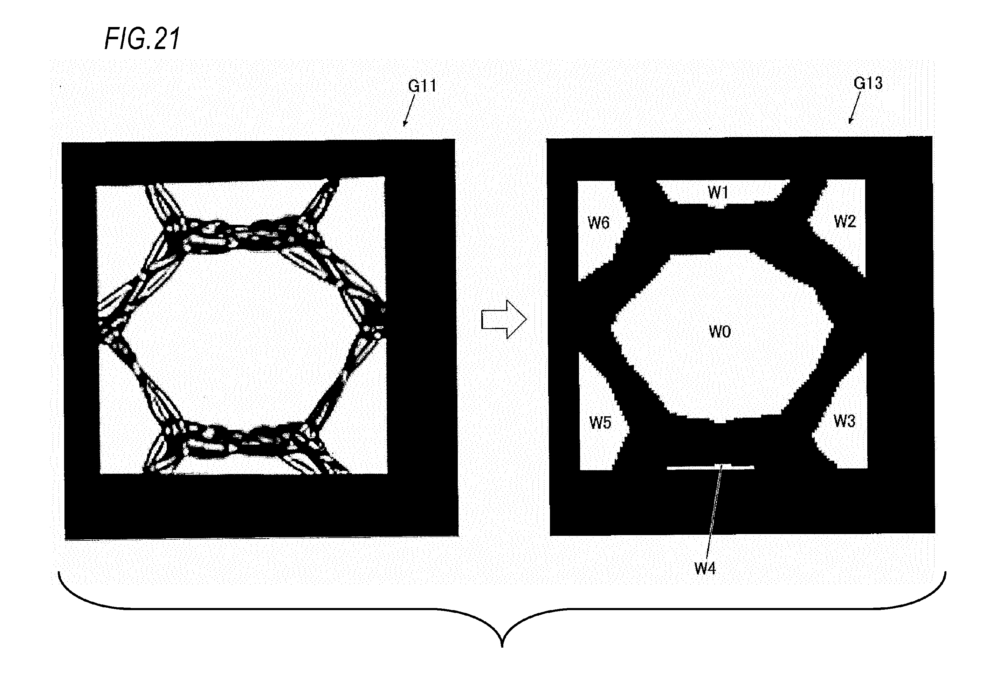

That is, the hair detection unit 108 performs binarization processing and black dilation processing on the data of the transformed pre-image G11, thereby generating a dilated image G13 of the mesh (dilated image generation step: step S43). FIG. 21 shows the transformed pre-image G11 and a dilated image G13 generated from the transformed pre-image G11.

The hair detection unit 108 first performs binarization processing on the data of the transformed pre-image G11. Thereby, each pixel constituting the transformed pre-image G11 is classified as either black or white by a luminance threshold value. Furthermore, among the respective pixels constituting the binarized transformed pre-image G11, pixels that are white are converted into black pixels under certain conditions according to the relationship with surrounding pixels. Thereby, a region in an image where white pixels and black pixels are mixed is unified as black pixels.

As shown in FIG. 21, the dilated image G13 consists of a substantially hexagonal white region at its center representing a mesh hole, six white regions surrounding the mesh hole representing other mesh holes, and black regions forming boundaries between the white regions.

The hair detection unit 108 executes a labeling process on each white region in the dilated image G13 (labeling step: step S45).

Among the respective labeled white regions, the hair detection unit 108 specifies a white region having the largest area as the mesh hole targeted for hair planting. Furthermore, the hair detection unit 108 specifies the six white regions having the next largest areas following the white region WO of the mesh hole targeted for hair planting, and obtains the centroid point positions of the seven white regions. Furthermore, the hair detection unit 108 specifies the six white areas as white areas W1 to W6 of "upper", "upper right", "lower right", "lower", "lower left", and "upper left", respectively, from the relative positional relationship of the centroid point positions of the six surrounding white regions with respect to the centroid point position of the white region WO of the mesh hole targeted for hair planting.

Then, for the dilated image G13, the hair detection unit 108 divides, into six groups, respective pixels constituting a contour edge that is a boundary line between the white region WO of the mesh hole targeted for hair planting and the surrounding black region, according to which of the six surrounding white regions W1 to W6 it is closest (edge division step: step S47).

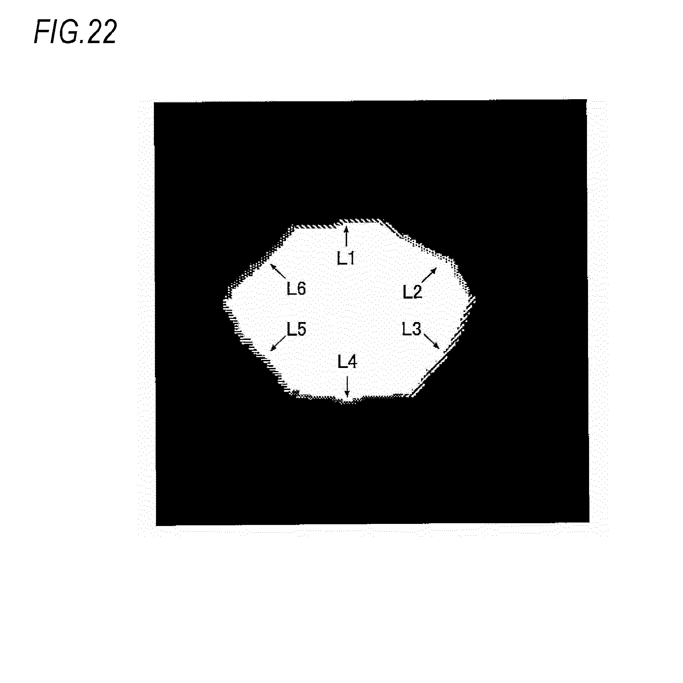

FIG. 22 is a conceptual diagram in which respective pixels constituting a contour edge are divided into six lines L1 to L6, with each line represented by a different pattern.

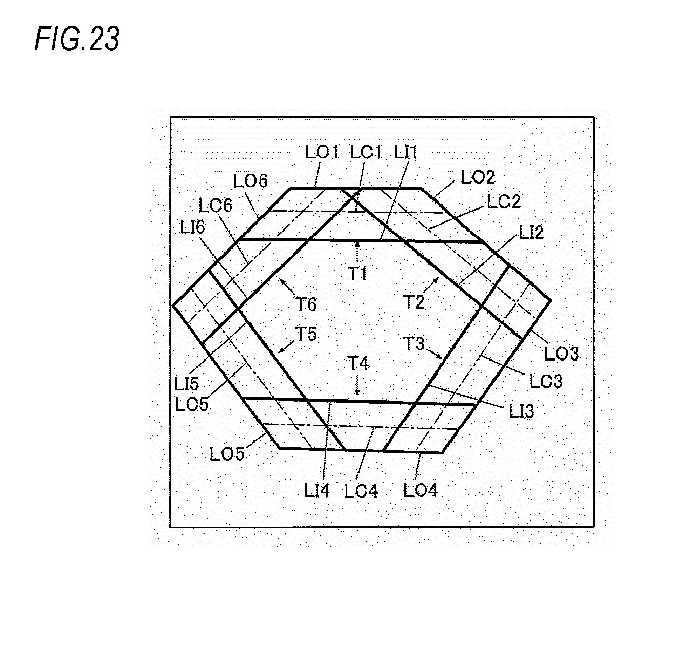

The hair detection unit 108 obtains an approximate straight line for each of the lines L1 to L6. For example, as shown in FIG. 23, a least-squares line is calculated from the position coordinates of the pixels constituting each of the lines L1 to L6, and these are defined as the approximate straight lines LC1 to LC6 (approximate straight line acquisition step: step S49).

Then, the hair detection unit 108 generates inner contour lines LI1 to LI6 and outer contour lines LO1 to LO6 by translating the approximate straight lines LC1 to LC6 in parallel by the same width toward the centroid point side of the white region WO and toward the opposite side.

The inner contour lines LI1 to LI6 and the outer contour lines LO1 to LO6 are acquired by translating the approximate straight lines LC1 to LC6 in parallel by a predetermined number of pixels. The number of pixels to be translated in parallel can be arbitrarily set, for example, from the operation panel 15. However, preferably, the number of pixels corresponds to a width such that the fiber portion around the mesh hole is included between the inner contour lines LI1 to LI6 and the outer contour lines LO1 to LO6.

A trapezoidal region T1 is then formed by the inner contour line LI1 and the outer contour line LO1, which are parallel to each other, and the outer contour lines LO2 and LO6 adjacent thereto. Similarly, trapezoidal hair planting position determination regions T2 to T6 are formed by the inner contour LI2 and the outer contour LO2, the inner contour LI3 and the outer contour LO3, the inner contour LI4 and the outer contour LO4, the inner contour LI5 and the outer contour LO5, and the inner contour LI6 and the outer contour LO6 (hair planting position determination region setting step: step S51).

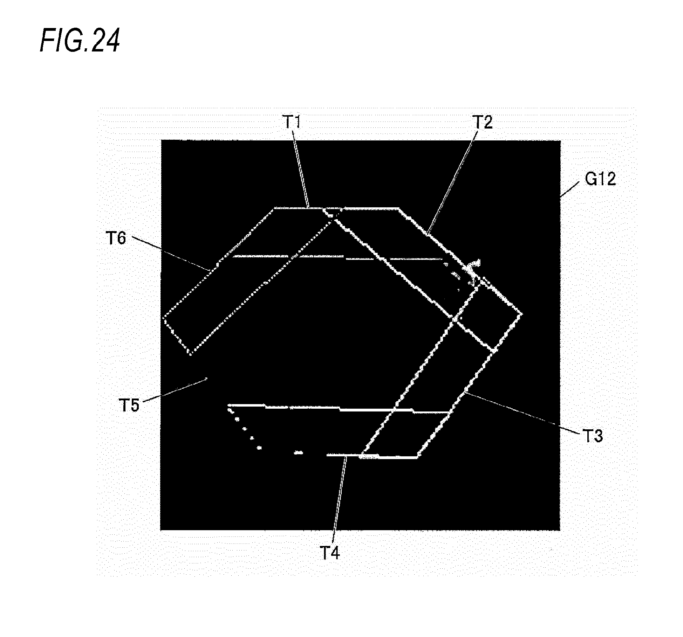

Subsequently, as shown in FIG. 24, the hair detection unit 108 superimposes the hair planting position determination regions T1 to T6 on the difference image G12 generated in the difference image generation step of S41. Then, the hair detection unit 108 counts, as a score, the number of pixels within each of the hair planting position determination regions T1 to T6 in the difference image G12 having a difference value (luminance value) equal to or greater than a specified value (hair planting position determination step: step S53).

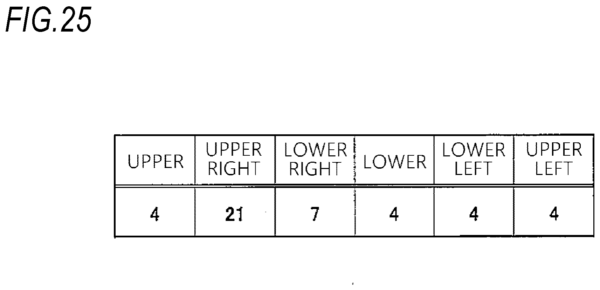

An example of the result of the count is shown in FIG. 25. The hair position determination region T1 is a region corresponding to the vicinity of the "upper" side of the hexagonal mesh, the hair position determination region T2 is a region corresponding to the vicinity of the "upper right" side, the hair position determination region T3 is a region corresponding to the vicinity of the "lower right" side, the hair position determination region T4 is a region corresponding to the vicinity of the "lower" side, the hair position determination region T5 is a region corresponding to the vicinity of the "lower left" side, and the hair position determination region T6 is a region corresponding to the vicinity of the "upper left" side.

Therefore, among the hair planting position determination regions T1 to T6, the region with the highest score indicates the site that has undergone the greatest visual change before and after the hair planting operation.

That is, in the example of FIG. 25, a significant visual change occurs in the upper-right hair planting position determination region T2 having the highest score, and it can be estimated that the hair for planting M is bound to the 'upper right' side of the hexagonal mesh corresponding to the hair planting position determination region T2.

Subsequently, the hair detection unit 108 compares the hair planting pattern data and determines whether the hair for planting M has been bound at the scheduled position of the current mesh targeted for hair planting (data comparison step: step S55).

Subsequently, returning to the flow chart of FIG. 15 showing the operation control of the hair planting operation, when the suitability determination of step S13 is completed, the CPU 101 determines the success or failure of the hair planting operation based on the result of the suitability determination (step S15).

That is, if the hair detection unit 108 determines that the hair for planting M is not bound at the scheduled position of the current mesh targeted for hair planting, the CPU 101 executes a notification process.

The notification process may, for example, notify an error externally using the operation panel 15 or other devices such as a lamp, buzzer, or speaker.

In addition, different responses may be taken depending on the content of the error. For example, if the hair for planting M is not present at the scheduled position of the mesh and is not erroneously bound at another position, the notification process may return to step S9 to retry the hair planting operation.

In addition, if the hair for planting M has been bound at a position other than the scheduled position of the mesh, the notification process may notify an error in the binding position with the operation panel 15 and wait for an operator's input for subsequent response. As a subsequent response, the next binding operation may be continued as it is, or the entire hair planting operation may be stopped.

On the other hand, in the determination of the success or failure of the hair planting operation in step S15, if it is determined that the hair for planting M has been bound at the scheduled position of the current mesh targeted for hair planting, the CPU 101 determines whether the binding of the hair for planting M has been completed for all binding locations in the current unit section K (step S17).

If the binding of the hair for planting M has not yet been completed for all binding locations, the processing returns to step S7, where the next mesh targeted for hair planting is positioned above the hook needle 211 of the first capture mechanism 21, and imaged, and the hair planting operation is executed.

On the other hand, if the binding of the hair for planting M has been completed for all binding locations in the current unit section K, the CPU 101 determines whether hair planting has been completed for all sections scheduled on the base material J (step S19). If hair planting has been completed for all sections, the CPU 101 lifts the clamp plate 51 of the clamp device 50 to the lifted position, releases the base material J on the placement plate 34, and terminates the hair planting operation.

On the other hand, if hair planting has not been completed for all sections, the CPU 101 executes a wiper operation step (step S21).

That is, the CPU 101 lowers and retracts each of the rollers 411 and 421 of the feed device 40, clamps the base material J with each of the auxiliary clamp plates 621, and retracts the clamp plate 51 to the lifted position.

Then, the CPU 101 advances the wiper member 611 by the sweeping-out air cylinder 613 of the wiper mechanism 61, and extends the wiper member 611 by the telescopic air cylinder 612. Furthermore, by retracting the wiper member 611 with the sweeping-out air cylinder 613, the hair for planting M inserted in the upper opening 511 is swept rearward and swept out from the upper opening 511.

At this time, the first blower mechanism 64 blows air rearward to suppress the rising of the hair for planting M that has been swept rearward.

Then, the CPU 101 lowers the clamp plate 51 to the weak clamp position and releases the auxiliary clamping of the base material J made by each of the auxiliary clamp plates 621.

Subsequently, the CPU 101 executes a step of feed control (step S23).

That is, the CPU 101 feeds the base material J in predetermined section units by lifting each of the rollers 411 of the feed device 40 and driving the X-axis feed motor 412 to move the base material J in the X-axis direction, or by lifting each of the rollers 421 and driving the Y-axis feed motor 422 to move the base material J in the Y-axis direction.

After the feed operation to the next section is completed, the CPU 101 lowers the clamp plate 51 to the strong clamp position.

After that, the CPU 101 repeats steps S3 to S23 for all sections and then terminates the hair planting operation.

### [Technical Effects of Embodiment of Invention]

As described above, the hair planting apparatus 10 includes: the image acquisition unit 105 that executes an image acquisition step in which the CPU 101 of the control device 100 acquires the pre-image G1 of a mesh targeted for hair planting of the base material J, captured before hair planting, and the post-image G2 thereof captured after hair planting; the transformation matrix acquisition unit 106 that executes a transformation matrix acquisition step of acquiring a posture transformation matrix of the mesh from the pre-image G1 and the post-image G2; the difference processing unit 107 that executes a difference step of acquiring the difference image G12 between the transformed pre-image G11, obtained by transforming the pre-image G1 with the posture transformation matrix, and the post-image G2; and the hair detection unit 108 that executes a hair detection step of specifying the presence or absence or the hair planting position of the hair for planting M with respect to the mesh from the difference image G12.

As a result, it becomes possible, based on the post-image G2 of the mesh that has undergone changes in position, shape, posture, or the like due to the binding of the hair for planting M by the hair planting operation, and the pre-image G1, to detect the hair for planting M and the binding position of the hair for planting M with maintained accuracy.

In addition, in the transformation matrix acquisition step executed by the transformation matrix acquisition unit 106, a plurality of feature points of the pre-image G1 and a plurality of feature points of the post-image G2 are obtained, and the posture transformation matrix is acquired from those that are matched among the feature points. Therefore, an appropriate posture transformation matrix can be readily obtained, enabling the detection of the hair for planting M and the detection of the binding position of the hair for planting M with improved accuracy.

In addition, in the hair detection step executed by the hair detection unit 108, the plurality of hair planting position determination regions T1 to T6 are set around the mesh hole from the transformed pre-image G11, and the hair planting position is specified based on the number of pixels of the difference image G12 within the plurality of hair planting position determination regions T1 to T6.

Accordingly, once the pre-image G1 and the post-image G2 are obtained, the hair planting position of the hair for planting M after the hair planting operation can be detected with higher accuracy.

### [Others]

Each embodiment of the present invention has been described. However, the present invention is not limited to the above embodiments. For example, in the above embodiments, a component integrally formed by a single member may be replaced with a component divided into a plurality of members and connected or fixed to each other. Additionally, a component formed by connecting a plurality of members may be replaced with a component formed integrally by a single member. In addition, the details described in the embodiments may be appropriately changed without departing from the spirit of the invention.

For example, the detection method of detecting the hair for planting M planted on the mesh of the base material J, executed by the CPU 101 of the control device 100, does not necessarily require the hair planting apparatus 10 including all of the above-described configurations. For example, the hair planting apparatus 10 may have a configuration including, as a minimum configuration, the base stage 30 serving as a base support mechanism, the hair planting unit 20, the camera 11 serving as an imaging unit, and the control device 100.

In addition, the detection method of detecting the hair for planting M planted on the mesh of the base material J, executed by the CPU 101 described above, may be configured such that an external computer of the hair planting apparatus 10 acquires data of the pre-image G 1 and the post-image G2 through communication or the like and executes the method.

## Claims

1. A detection method of detecting hair for planting planted on a mesh of a mesh-like base material, the detection method comprising:
image acquisition of acquiring a pre-image of the mesh targeted for hair planting of the base material captured before hair planting and a post-image thereof captured after hair planting,
transformation matrix acquisition of acquiring a posture transformation matrix of the mesh from the pre-image and the post-image,
acquiring a difference image between a transformed pre-image and the post-image, the transformed pre-image being obtained by transforming the pre-image with the posture transformation matrix, and
hair detection of specifying the presence or absence or a hair planting position of hair for planting with respect to the mesh from the difference image.

2. The detection method according to claim 1, wherein in the transformation matrix acquisition, a plurality of feature points of the pre-image and a plurality of feature points of the post-image are obtained, and the posture transformation matrix is acquired from those that are matched among the feature points.

3. The detection method according to claim 1, wherein in the hair detection, a plurality of regions are set around a hole of the mesh from the transformed pre-image, and the hair planting position is specified from the number of pixels of the difference image within the plurality of regions.

4. A hair planting apparatus comprising:
a base support mechanism configured to support a mesh-like base material;
a hair planting unit configured to knot hair for planting to the base material using a hook needle;
an imaging unit configured to capture a position where the hair planting unit performs a hair planting operation on the base material supported by the base support mechanism;
an image acquisition processing unit configured to acquire a pre-image of a mesh targeted for hair planting of the base material captured before hair planting and a post-image thereof captured after hair planting,
a transformation matrix acquisition processing unit configured to acquire a posture transformation matrix of the mesh from the pre-image and the post-image,
a difference processing unit configured to acquire a difference image between a transformed pre-image and the post-image, the transformed pre-image being obtained by transforming the pre-image with the posture transformation matrix, and
a hair-for-planting detection processing unit configured to specify the presence or absence or a hair planting position of hair for planting with respect to the mesh from the difference image.
